# EUROPEAN PATENT APPLICATION

(11) **EP 4 848 834 A1**
(43) Date of publication of application: **02.12.2026**
(21) Application number: 25749165.4
(22) Date of filing: 06.01.2025
(51) Int. Cl.: H04W 52/02, H04L 67/145, H04L 67/10, H04L 67/50

(54) **ELECTRONIC DEVICE FOR MANAGING WAKE-UP PERIODS FOR SERVICES AND OPERATING METHOD THEREOF**

(30) Priority: 29.01.2024 KR 20240012995; 26.02.2024 KR 20240027420
(71) Applicant: Samsung Electronics Co., Ltd., Suwon-si, Gyeonggi-do 16677 (KR)
(72) Inventor: LEE, Kiyong, Suwon-si, Gyeonggi-do 16677 (KR)
(74) Representative: Nederlandsch Octrooibureau
(86) International application number: PCT/KR2025/000221
(87) International publication number: WO 2025/164982

(57) **Abstract**

The present disclosure provides an electronic device (101) comprising: communication circuits (190; 320); one or more processors (120; 310) including processing circuitry; and a memory (130) storing instructions, wherein the instructions, when executed individually or collectively by the one or more processors, cause the electronic device to: transmit, to external electronic devices (108; 600) through the communication circuits, a first message including first information related to a first wake-up period, which corresponds to a communication service and is preferred by the electronic device, and second information related to a device that performs a keep-alive operation; in response to the first message, receive, from the external electronic devices through the communication circuits, a second message including third information related to a second wake-up period, which corresponds to the communication service and is preferred by the external electronic devices, and fourth information associated with the second information and related to the device that performs the keep-alive operation; and perform the keep-alive operation on the basis of the fourth information and fifth information, which is associated with the first information and the third information and is related to a wake-up period corresponding to the communication service. Other embodiments are possible.

## Description

### [Technical Field]

The disclosure relates to an electronic device for managing wake-up periods for services and an operating method thereof.

### [Background Art]

A keep-alive mechanism for periodically identifying a network state is applied to various services, and representative examples among the various services may be a rich communication suite (RCS) service and a voice over long term evolution (VoLTE) service.

The keep-alive mechanism may be implemented in various schemes, and a representative example among the various schemes may be a scheme based on a Request for Comments (RFC) 6223 standard. In the keep-alive mechanism based on the RFC 6223 standard, an electronic device may request to perform a keep-alive procedure, and a keep-alive frequency used in the keep-alive procedure may be set only by an external electronic device (e.g., a server).

As such, in the keep-alive mechanism based on the RFC 6223 standard, the keep-alive procedure is performed without a separate negotiation procedure between the electronic device and the server, so there is no consideration for a state of the electronic device, thereby resources (e.g., current) may be wasted due to a keep-alive operation.

### [Disclosure]

### [Technical Solution]

According to an embodiment of the disclosure, an electronic device (101) may comprise communication circuitry (190; 320), one or more processors (120; 310) including processing circuitry, and memory (130) storing instructions.

According to an embodiment of the disclosure, the instructions, when executed by the one or more processors individually or collectively, may cause the electronic device to transmit, to an external electronic device (108; 600) via the communication circuitry, a first message including first information related to a first wake-up period, which is preferred by the electronic device and corresponds to a communication service, and second information related to a device which performs a keep-alive operation.

According to an embodiment of the disclosure, the instructions, when executed by the one or more processors individually or collectively, may cause the electronic device to, in response to the first message, receive, from the external electronic device via the communication circuitry, a second message including third information related to a second wake-up period, which is preferred by the external electronic device and corresponds to the communication service, and fourth information related to a device which performs the keep-alive operation, the fourth information being associated with the second information.

According to an embodiment of the disclosure, the instructions, when executed by the one or more processors individually or collectively, may cause the electronic device to perform the keep-alive operation based on the fourth information and fifth information related to a wake-up period which is associated with the first information and the third information and corresponds to the communication service.

According to an embodiment of the disclosure, an electronic device (101) may comprise communication circuitry (190; 320), one or more processors (120; 310) including processing circuitry, and memory (130) storing instructions.

According to an embodiment of the disclosure, the instructions, when executed by the one or more processors individually or collectively, may cause the electronic device to identify whether a set condition related to a change in a wake-up period corresponding to a communication service is satisfied while performing a keep-alive operation with an external electronic device (108; 600) based on the wake-up period.

According to an embodiment of the disclosure, the instructions, when executed by the one or more processors individually or collectively, may cause the electronic device to, based on identifying that the set condition is satisfied, transmit, to the external electronic device via the communication circuitry, a first message including first information related to a first wake-up period, which is preferred by the electronic device and corresponds to the communication service, and second information related to a device which performs the keep-alive operation.

According to an embodiment of the disclosure, the instructions, when executed by the one or more processors individually or collectively, may cause the electronic device to, in response to the first message, receive, from the external electronic device via the communication circuitry, a second message including third information related to a second wake-up period, which is preferred by the external electronic device and corresponds to the communication service, and fourth information related to a device which performs the keep-alive operation, the fourth information being associated with the second information.

According to an embodiment of the disclosure, the instructions, when executed by the one or more processors individually or collectively, may cause the electronic device to perform the keep-alive operation based on the fourth information and fifth information related to a changed wake-up period which is associated with the first information and the third information.

According to an embodiment of the disclosure, an electronic device (101) may comprise communication circuitry (190; 320), one or more processors (120; 310) including processing circuitry, and memory (130) storing instructions.

According to an embodiment of the disclosure, the instructions that, when executed by the one or more processors individually or collectively, cause the electronic device to transmit, to a first external electronic device (111a) via the communication circuitry, a first message including first information related to a first wake-up period, which is preferred by the electronic device and corresponds to a first communication service, and second information related to a device which performs a keep-alive operation.

According to an embodiment of the disclosure, the instructions that, when executed by the one or more processors individually or collectively, cause the electronic device to transmit, to a second external electronic device (111b) via the communication circuitry, a second message including third information related to a second wake-up period, which is preferred by the electronic device and corresponds to a second communication service, and fourth information related to a device which performs the keep-alive operation.

According to an embodiment of the disclosure, the instructions that, when executed by the one or more processors individually or collectively, cause the electronic device to, in response to the first message, receive, from the first external electronic device via the communication circuitry, a third message including fifth information related to a third wake-up period which is preferred by the first external electronic device and corresponds to the first communication service, and sixth information related to a device performing the keep-alive operation, the sixth information being associated with the second information.

According to an embodiment of the disclosure, the instructions that, when executed by the one or more processors individually or collectively, cause the electronic device to, in response to the second message, receive, from the second external electronic device via the communication circuitry, a fourth message including seventh information related to a fourth wake-up period which is preferred by the second external electronic device and corresponds to the second communication service, and eighth information related to a device performing the keep-alive operation, the eighth information being associated with the fourth information.

According to an embodiment of the disclosure, the instructions that, when executed by the one or more processors individually or collectively, cause the electronic device to perform the keep-alive operation based on the sixth information, the eighth information, and ninth information related to a wake-up period corresponding to the first communication service and the second communication service, the ninth information being associated with the fifth information and the seventh information.

According to an embodiment of the disclosure, a method may include transmitting, to an external electronic device (108; 600), a first message including first information related to a first wake-up time point which is preferred by an electronic device (101) and corresponds to a service, and second information related to a device performing a set operation.

According to an embodiment of the disclosure, the method may include, in response to the first message, receiving, from the external electronic device, a second message including third information related to a second wake-up time point which is preferred by the external electronic device and corresponds to the service, and fourth information related to a device performing the set operation.

According to an embodiment of the disclosure, the method may include, based on the fourth information, identifying whether to perform the set operation.

According to an embodiment of the disclosure, the method may include, based on identifying to perform the set operation, determining fifth information related to a wake-up time point corresponding to the service based on the first information and the third information.

According to an embodiment of the disclosure, the method may include performing the set operation at a wake-up time point corresponding to the fifth information.

According to an embodiment of the disclosure, a method may include transmitting, to a first external electronic device (111a), a first message including first information related to a first wake-up time point which is preferred by an electronic device (101) and corresponds to a first service, and second information related to a device performing a set operation.

According to an embodiment of the disclosure, the method may include transmitting, to a second external electronic device (111b), a second message including third information related to a second wake-up time point which is preferred by the electronic device and corresponds to a second service, and fourth information related to a device performing the set operation.

According to an embodiment of the disclosure, the method may include, in response to the first message, receiving, from the first external electronic device, a third message including fifth information related to a third wake-up time point which is preferred by the first external electronic device and corresponds to the first service, and sixth information related to a device performing the set operation.

According to an embodiment of the disclosure, the method may include, in response to the second message, receiving, from the second external electronic device, a fourth message including seventh information related to a fourth wake-up time point which is preferred by the second external electronic device and corresponds to the second service, and eighth information related to a device performing the set operation.

According to an embodiment of the disclosure, the method may include, based on the sixth information and the eighth information, identifying whether to perform the set operation.

According to an embodiment of the disclosure, the method may include, based on identifying to perform the set operation, determining ninth information related to a wake-up time point corresponding to the first service and the second service based on the fifth information and the seventh information.

According to an embodiment of the disclosure, the method may include performing the set operation at a wake-up time point corresponding to the ninth information.

According to an embodiment of the disclosure, a storage medium storing at least one instruction readable by a computer may be provided.

According to an embodiment of the disclosure, the at least one computer instruction, when executed by one or more processors (120; 310) of an electronic device (101) individually or collectively, may cause the electronic device to perform at least one operation.

According to an embodiment of the disclosure, the at least one operation may comprise transmitting, to an external electronic device (108; 600), a first message including first information related to a first wake-up period, which is preferred by the electronic device and corresponds to a communication service, and second information related to a device which performs a keep-alive operation.

According to an embodiment of the disclosure, the at least one operation may comprise, in response to the first message, receiving, from the external electronic device, a second message including third information related to a second wake-up period, which is preferred by the external electronic device and corresponds to the communication service, and fourth information related to a device which performs the keep-alive operation.

According to an embodiment of the disclosure, the at least one operation may comprise performing the keep-alive operation based on the fourth information and fifth information related to a wake-up period which is associated with the first information and the third information and corresponds to the communication service.

According to an embodiment of the disclosure, a storage medium storing at least one instruction readable by a computer may be provided.

According to an embodiment of the disclosure, the at least one computer instruction, when executed by one or more processors (120; 310) of an electronic device (101) individually or collectively, may cause the electronic device to perform at least one operation.

According to an embodiment of the disclosure, the at least one operation may comprise identifying whether a set condition related to a change in a wake-up period corresponding to a communication service is satisfied while performing a keep-alive operation with an external electronic device (108; 600) based on the wake-up period.

According to an embodiment of the disclosure, the at least one operation may comprise, based on identifying that the set condition is satisfied, transmitting, to the external electronic device, a first message including first information related to a first wake-up period, which is preferred by the electronic device and corresponds to the communication service, and second information related to a device which performs the keep-alive operation.

According to an embodiment of the disclosure, the at least one operation may comprise, in response to the first message, receiving, from the external electronic device, a second message including third information related to a second wake-up period, which is preferred by the external electronic device and corresponds to the communication service, and fourth information related to a device which performs the keep-alive operation, the fourth information being associated with the second information.

According to an embodiment of the disclosure, the at least one operation may comprise performing the keep-alive operation based on the fourth information and fifth information related to a changed wake-up period which is associated with the first information and the third information.

According to an embodiment of the disclosure, a storage medium storing at least one instruction readable by a computer may be provided.

According to an embodiment of the disclosure, the at least one computer instruction, when executed by one or more processors (120; 310) of an electronic device (101) individually or collectively, may cause the electronic device to perform at least one operation.

According to an embodiment of the disclosure, the at least one operation may comprise transmitting, to a first external electronic device (111a), a first message including first information related to a first wake-up period, which is preferred by the electronic device and corresponds to a first communication service, and second information related to a device which performs a keep-alive operation.

According to an embodiment of the disclosure, the at least one operation may comprise transmitting, to a second external electronic device (111b), a second message including third information related to a second wake-up period, which is preferred by the electronic device and corresponds to a second communication service, and fourth information related to a device which performs the keep-alive operation.

According to an embodiment of the disclosure, the at least one operation may comprise, in response to the first message, receiving, from the first external electronic device, a third message including fifth information related to a third wake-up period which is preferred by the first external electronic device and corresponds to the first communication service, and sixth information related to a device performing the keep-alive operation, the sixth information being associated with the second information.

According to an embodiment of the disclosure, the at least one operation may comprise, in response to the second message, receiving, from the second external electronic device, a fourth message including seventh information related to a fourth wake-up period which is preferred by the second external electronic device and corresponds to the second communication service, and eighth information related to a device performing the keep-alive operation, the eighth information being associated with the fourth information.

According to an embodiment of the disclosure, the at least one operation may comprise performing the keep-alive operation based on the sixth information, the eighth information, and ninth information related to a wake-up period corresponding to the first communication service and the second communication service, the ninth information being associated with the fifth information and the seventh information.

### [Description of Drawings]

FIG. 1A is a block diagram schematically illustrating an electronic device within a network environment according to an embodiment.
FIG. 1B is a diagram schematically illustrating a network environment including an electronic device according to an embodiment.
FIG. 2 is a diagram schematically illustrating a wireless communication system for providing an electronic device with a profile-based communication connection according to an embodiment.
FIG. 3 is a block diagram schematically illustrating an internal structure of an electronic device according to an embodiment.
FIG. 4 is a flowchart illustrating an operating process of an electronic device, according to an embodiment.
FIG. 5 is a flowchart illustrating an operating process of an electronic device, according to an embodiment.
FIG. 6 is a signal flow diagram illustrating a process of managing wake-up time points in a wireless communication network, according to an embodiment.
FIG. 7 is a signal flow diagram illustrating a process of managing wake-up time points in a wireless communication network, according to an embodiment.
FIG. 8 is a signal flow diagram illustrating a process of managing wake-up time points in a wireless communication network, according to an embodiment.
FIG. 9A is a signal flow diagram illustrating a process of managing wake-up time points in a wireless communication network, according to an embodiment.
FIG. 9B is a signal flow diagram illustrating a process of managing wake-up time points in a wireless communication network, according to an embodiment.
FIG. 10 is a flowchart illustrating an operating process of an electronic device, according to an embodiment.
FIG. 11 is a flowchart illustrating an operating process of an electronic device, according to an embodiment.
FIG. 12 is a flowchart illustrating an operating process of an electronic device, according to an embodiment.

### [Mode for Invention]

Hereinafter, an embodiment of the disclosure will be described in detail with reference to the accompanying drawings. In the following description of an embodiment of the disclosure, a detailed description of relevant known functions or configurations incorporated herein will be omitted when it is determined that the description may make the subject matter of an embodiment of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

It should be noted that the technical terms used herein are only used to describe a specific embodiment, and are not intended to limit an embodiment of the disclosure. Alternatively, the technical terms used herein should be interpreted to have the same meaning as those commonly understood by a person skilled in the art to which the disclosure pertains, and should not be interpreted have excessively comprehensive or excessively restricted meanings unless particularly defined as other meanings. Alternatively, when the technical terms used herein are wrong technical terms that cannot correctly represent the idea of the disclosure, it should be appreciated that they are replaced by technical terms correctly understood by those skilled in the art. Alternatively, the general terms used in an embodiment of the disclosure should be interpreted as defined in dictionaries or interpreted in the context of the relevant part, and should not be interpreted to have excessively restricted meanings.

Alternatively, a singular expression used herein may include a plural expression unless they are definitely different in the context. As used herein, such an expression as "comprises" or "include", or the like should not be interpreted to necessarily include all elements or all operations described in the specification, and should be interpreted to be allowed to exclude some of them or further include additional elements or operations.

Alternatively, the terms including an ordinal number, such as expressions "a first" and "a second" may be used to describe various elements, but the corresponding elements should not be limited by such terms. These terms are used merely to distinguish between one element and any other element. For example, a first element may be termed a second element, and similarly, a second element may be termed a first element without departing from the scope of the disclosure.

It should be understood that when an element is referred to as being "connected" or "coupled" to another element, it may be connected or coupled directly to the other element, or any other element may be interposer between them. In contrast, it should be understood that when an element is referred to as being "directly connected" or "directly coupled" to another element, there are no element interposed between them.

Hereinafter, an embodiment of the disclosure will be described in detail with reference to the accompanying drawings. Regardless of drawing signs, the same or like elements are provided with the same reference numeral, and a repeated description thereof will be omitted. Alternatively, in describing an embodiment of the disclosure, a detailed description of relevant known technologies will be omitted when it is determined that the description may make the subject matter of the disclosure unclear. Alternatively, it should be noted that the accompanying drawings are presented merely to help easy understanding of the technical idea of the disclosure, and should not be construed to limit the technical idea of the disclosure. The technical idea of the disclosure should be construed to cover all changes, equivalents, and alternatives, in addition to the drawings.

Hereinafter, an electronic device will be described in an embodiment of the disclosure, but the electronic device may be referred to as a terminal, a mobile station, a mobile equipment (ME), a user equipment (UE), a user terminal (UT), a subscriber station (SS), a wireless device, a handheld device, and an access terminal (AT). Alternatively, in an embodiment of the disclosure, the electronic device may be a device having a communication function such as, for example, a mobile phone, a personal digital assistant (PDA), a smart phone, a wireless MODEM, and a notebook.

Alternatively, in describing an embodiment of the disclosure in detail, reference will be made to a Request for Comments (RFC) 6223 standard, but the main subject matter of the disclosure may also be applied to communication systems applying other standards having a similar technical background with slight modifications within a range that does not significantly depart from the scope of the disclosure, which may be determined by a person skilled in the art of the technical field of the disclosure.

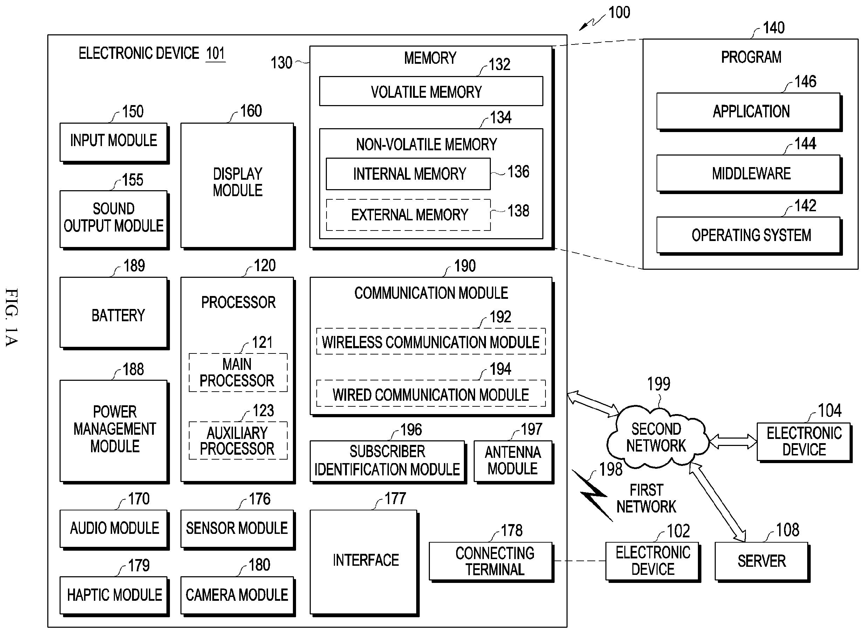

FIG. 1A is a block diagram illustrating an electronic device 101 in a network environment 100 according to various embodiments.

Referring to FIG. 1A, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control, for example, at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active (e.g., executing an application) state. According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence model is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or an external electronic device (e.g., an electronic device 102 (e.g., a speaker or a headphone)) directly or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as Bluetooth^{TM}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1^{st}" and "2^{nd}," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or two or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{TM}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components or operations may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

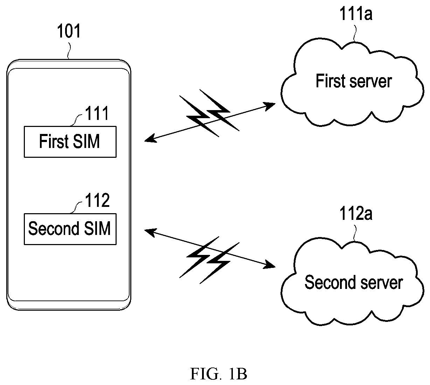

FIG. 1B is a diagram schematically illustrating a network environment 100 including an electronic device 101 according to an embodiment.

Referring to FIG. 1B, a network according to an embodiment of the disclosure may include an electronic device 101, a first server 111a, and/or a second server 112a. In an embodiment, the first server 111a may be a voice over long term evolution (VoLTE) server providing a VoLTE service. In an embodiment, the second server 112a may be a rich communication suite (RCS) server providing an RCS service. Although FIG. 1B illustrates a case where the first server 111a providing the VoLTE service and the second server 112a providing the RCS service are implemented separately, the first server 111a and the second server 112a may be integrated into a single server, and the integrated single server may provide the VoLTE service and the RCS service.

According to an embodiment, the electronic device 101 may be a multi-SIM electronic device supporting a plurality of SIMs. If the electronic device 101 supports two SIMs, the electronic device 101 may be a dual SIM dual standby (DSDS) electronic device or a dual SIM dual active (DSDA) electronic device. The electronic device 101 may include two SIMs (e.g., a first SIM 111 and a second SIM 112). There is no limitation on a type of each of the first SIM 111 and the second SIM 112. For example, each of the first SIM 111 and the second SIM 112 may be a removable SIM (rSIM) (e.g., a SIM card). The electronic device 101 may include a first slot (not shown) and a second slot (not shown) to accommodate the first SIM 111 and the second SIM 112, respectively. In this case, those skilled in the art will understand that the electronic device 101 including the first SIM 111 and the second SIM 112 may mean a state in which the first SIM 111 and the second SIM 112 are mounted in the electronic device 101, and may not mean that the first SIM 111 and the second SIM 112 are necessarily included in the electronic device 101. For another example, at least one of the first SIM 111 and the second SIM 112 may include an embedded subscriber identity module (eSIM). The eSIM may also be referred to as an embedded UICC (universal integrated circuit card) (eUICC).

According to an embodiment, the first SIM 111 is a SIM subscribed to a communication carrier of the first server 111a, and the electronic device 101 may be provided with the VoLTE service by accessing the first server 111a using the first SIM 111. The second SIM 112 is a SIM subscribed to a communication carrier of the second server 112a, and the electronic device 101 may be provided with the RCS service by accessing the second server 112a using the second SIM 112.

According to an embodiment, the electronic device 101 may be a single-SIM electronic device supporting only a single SIM. Even if the electronic device 101 supports only the single SIM, the electronic device 101 may provide the VoLTE service and the RCS service, and each of the VoLTE service and the RCS service may be provided via a separate App.

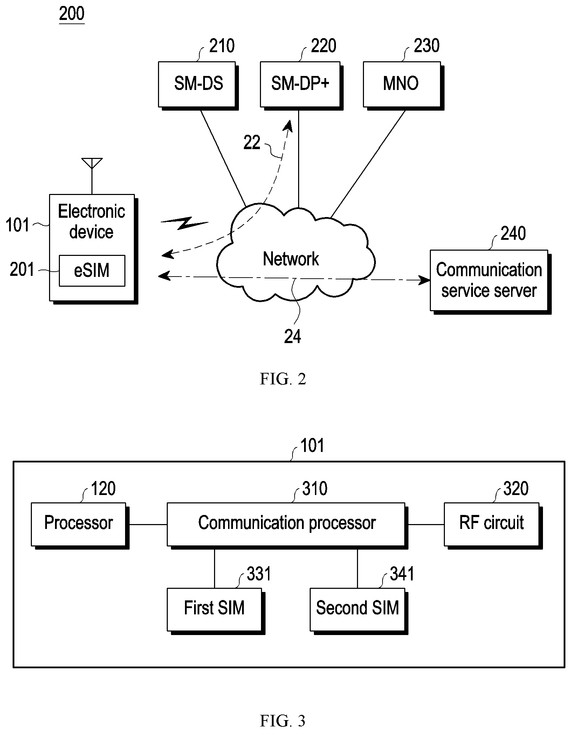

FIG. 2 is a diagram schematically illustrating a wireless communication system for providing an electronic device with a profile-based communication connection according to an embodiment.

Referring to FIG. 2, according to an embodiment, a wireless communication system 200 may include an electronic device 101 (e.g., an electronic device 101 in FIG. 1A or 1B, a subscription manager discovery service (SM-DS) server 210, a subscription manager data preparation plus (SM-DP+) server 220, a mobile network operator (MNO) server 230, and/or a communication service server 240.

In an embodiment, an MNO may be a communication carrier. According to an embodiment, the electronic device 101 may include an eSIM 201. For convenience of a description, although not shown, the electronic device 101 may include at least two slots capable of accommodating at least two rSIMs. Alternatively, the electronic device 101 may include one slot capable of accommodating at least two eSIMs and one rSIM. According to an embodiment, the electronic device 101 may include or accommodate N (N is an integer greater than or equal to 1) SIMs (eSIMs or rSIMs) and may perform a switching operation to use some of the N SIMs. There may be no limitation to combining the N SIMs, and there may be also no limitation to a value of N.

According to an embodiment, the eSIM 201 may be inserted into the electronic device 101, or may be provided integrally with the electronic device 101, or implemented to be accessible by the electronic device 101. According to an embodiment, the eSIM 201 may allow the electronic device 101 to perform an authenticating operation with a server of the communication carrier (e.g., the MNO) using information (e.g., a profile including universal subscriber identity module (USIM) information) within the eSIM 201. According to an embodiment, the eSIM 201 may be called a subscriber identity module (SIM) card in a global system for mobile communications (GSM) scheme or may be called a universal subscriber identity module (USIM) card in a wideband code division multiple access (WCDMA) scheme, a long-term evolution (LTE) scheme, and/or a new radio (NR) scheme. For example, if a user of the electronic device 101 subscribes to a wireless communication service provided by the communication carrier, the electronic device 101 may perform an authentication operation with the server of the communication carrier using information (e.g., an international mobile subscriber identity (IMSI) value) within the eSIM 201 and an encryption key (e.g., a K value) for authentication.

If the authentication operation for the electronic device 101 is successful, the electronic device 101 may be enabled to use a wireless communication service. For example, the authentication operation may be an authentication operation based on an authentication and key agreement (AKA) protocol. In an embodiment, the authentication operation may be based on other authentication schemes as well as the AKA protocol.

According to an embodiment, the eSIM 201 may be manufactured in a form of a dedicated card for a designated communication carrier according to a request of the corresponding communication carrier. Authentication information (e.g., a USIM application and a subscriber ID (e.g., an IMSI)), and/or an encryption key (e.g., a known K value or Ki value) for a network access of the corresponding communication carrier may be preloaded in the eSIM 201. An application (or information) within the eSIM 201 may be installed, modified, deleted, or updated using a scheme such as an over the air (OTA) scheme if necessary.

According to an embodiment, the eSIM 201 may download and/or store information for providing a communication service, in the form of a profile. According to an embodiment, the profile may be installed or stored in a process of manufacturing the eSIM 201 or may be downloaded by the electronic device 101 based on the OTA scheme and then installed or stored in the eSIM 201.

In an embodiment, the profile may include a provisioning profile and an operational profile. Even though the provisioning profile is not installed, the electronic device 101 may download the operational profile through a short-range connection which is based on a Wi-Fi scheme or an Internet connection. According to an embodiment, the provisioning profile does not need to be necessarily installed on the electronic device 101. For example, the operational profile may be a profile including subscriber identification information (e.g., an IMSI) of the user of the electronic device 101, and the provisioning profile may include information (hereinafter, it may be also referred to as "first information") for downloading subscriber identity information or a profile (hereinafter, it may be also referred to as a "first operational profile") including subscriber identity information (hereinafter, it may be also referred to as "first subscriber identity information") in the electronic device 101.

The electronic device 101 may download the first operational profile based on the first information included in the provisioning profile within the eSIM 201.

According to an embodiment, the electronic device 101 may receive a communication service using subscriber identity information (hereinafter, it may be also referred to as "second subscriber identity information") in an operational profile (hereinafter, it may be also referred to as a "second operational profile") installed in the eSIM 201 or stored in the eSIM 201. For example, the profile including subscriber identification information may be a SIM profile.

According to an embodiment, the operational profile may further include various information related to a subscriber (e.g., network access authentication information, a phone book, and personal information (e.g., a short message service (SMS)), a name of a subscribed communication carrier, an available service, available data amount, fee, a service provision speed, or information enabling secure use of a wireless communication service by performing subscriber authentication and traffic security key generation when accessing a wireless communication network (e.g., GSM, WCDMA, LTE, and/or NR wireless communication networks)) as well as the subscriber identity information.

According to an embodiment, the first information for downloading data (e.g., the first operational profile) including the first subscriber identity information may include communication session information for a first communication connection designated for downloading the first operational profile. For example, the communication session information may include access information for the SM-DS server 210 for downloading the first operational profile or communication carrier network information usable for an access to the SM-DS server 210.

According to an embodiment, the SM-DS server 210 may provide the electronic device 101 with an address of the SM-DP+ server 220 for downloading the first operational profile based on the provisioning profile.

According to an embodiment, the SM-DP+ server 220 may be a profile providing server, an off-card entity of profile domain, a profile encrypting server, a profile generating server, a profile provisioner, or a profile provider. The SM-DP+ server 220 may perform an operation of establishing a first communication connection 22 with the electronic device 101 through a wireless communication network based on a first communication connection request based on the provisioning profile from the electronic device 101, and may provide the electronic device 101 with the first operational profile via the first communication connection 22.

According to an embodiment, the wireless communication network may be a designated node of the wireless communication network. For example, the wireless communication network may be a base station, a subscriber information management node, or a mobility management node of the wireless communication network. According to an embodiment, the wireless communication network may include a home position register (HLR) and/or authentication center (AuC) server which is accessed by the electronic device 101 to perform a subscriber authenticating function. According to an embodiment, after successful authentication, the electronic device 101 may be connected to the communication service server 240 capable of providing various communication services such as a voice communication or a data communication.

According to an embodiment, the MNO server 230 may be a server associated with a mobile communication network operator. According to an embodiment, the MNO server 230 may request the SM-DS+ server 220 to prepare for at least one profile (or profile package) (e.g., the first operational profile) associated with at least one subscriber identity information (e.g., the first subscriber identity information). In an embodiment, the MNO server 230 may transmit information associated with the first operational profile to the SM-DS+ server 220. According to an embodiment, the MNO server 230 may transmit a signal for updating and managing the first operational profile to the SM-DS+ server 220. The MNO server 230 may allow a second communication connection 24 between the electronic device 101 and the communication service server 240 via the second operational profile installed in the eSIM 201 of the electronic device 101.

According to an embodiment, the communication service server 240 may be a server providing communication services. According to an embodiment, the communication service may be a service associated with transmission or reception of data through a wireless communication network. According to an embodiment, the communication service may include a service associated with transmission or reception of another profile (or data) not including subscriber identity information other than downloading the operational profile (e.g., the first operational profile including the first subscriber identity information). For example, the communication service server 240 may include various service servers associated with data transmission and reception, such as a server associated with each of various applications, a push server, a search server, or a market server. In an embodiment, a communication service by the communication service server 240 may include various services, such as data transmission/reception by an application, notification reception, push reception, link reception and access, or service request.

According to an embodiment, upon requesting a service associated with transmission or reception of a profile (or data) not including subscriber identification information, the electronic device 101 may perform the second communication connection 24 with the communication service server 240 based on the second operational profile.

According to an embodiment, the SM-DS server 210, the SM-DP+ server 220, the MNO server 230, or the communication service server 240 is just an example of implementation of servers for performing the corresponding function, and the SM-DS server 210, the SM-DP+ server 220, the MNO server 230, or the communication service server 240 may be referred to by other names. According to an embodiment, each of the SM-DS server 210, the SM-DP+ server 220, the MNO server 230, or the communication service server 240 may be composed of one or a plurality of servers. Some or all of the SM-DS server 210, the SM-DP+ server 220, the MNO server 230, or the communication service server 240 may be implemented as a single integrated server.

According to an embodiment, an electronic device (e.g., an electronic device 101 in FIG. 1A, 1B, or 2) may include a display (e.g., a display module 160 in FIG. 1A), a communication module (e.g., a communication module 190 in FIG. 1A), an embedded subscriber identity module (e.g., a subscriber identity module 196 in FIG. 1A or an eSIM 201 in FIG. 2) storing first information associated with a first communication connection for downloading data including first subscriber identity information for accessing at least one communication service provision server, memory (e.g., memory 130 in FIG. 1a or memory 211 in FIG. 2), and a processor (e.g., a processor 120 in FIG. 1A) electrically connected to the display, the communication module, and the memory.

In an embodiment, the processor may be configured to perform a first communication connection for downloading the data including the first subscriber identity information based on the first information via the communication module, upon a request for transmission or reception of data not including the first subscriber identity information while performing the first communication connection, terminate the first communication connection, and perform transmission or reception of data by performing a second communication connection based on second subscriber identity information.

According to an embodiment, the first information may include a provisioning profile, and the data including the first subscriber identity information may include a first operational profile.

According to an embodiment, the processor may be configured to, upon a request for transmission or reception of data while performing the first communication connection, if the second subscriber identity information does not exist in the subscriber identity module, display that a second operational profile corresponding to the second subscriber identity information does not exist via the display.

According to an embodiment, the processor may be further configured to, if the second operational profile does not exist, display a purchase screen associated with the second operational profile.

According to an embodiment, the processor may be configured to perform a second communication session based on a previously used second operational profile.

According to an embodiment, the processor may be configured to perform the second communication session based on a second operational profile selected by a user.

According to an embodiment, the processor may be configured to display at least one indicator indicating the first communication connection based on the provisioning profile via the display.

According to an embodiment, the at least one indicator may include at least one of a service provider name (SPN), a radio access technology (RAT), and a received signal strength indicator (RSSI).

According to an embodiment, the processor may be configured to select a provisioning profile associated with a network being accessed via the communication module.

According to an embodiment, the processor may be configured to select a provisioning profile associated with the network being accessed based on at least one of a public land mobile network (PLMN) identifier, a mobile country code (MCC), and area information of the network being accessed via the communication module.

FIG. 3 is a block diagram schematically illustrating an example of an internal structure of an electronic device 101 according to an embodiment.

Referring to FIG. 3, an electronic device 101 may include at least one of a processor 120, a communication processor 310, RF circuitry 320, a first SIM 331, or a second SIM 341. At least one of the first SIM 331 or the second SIM 341 may be a removable SIM (rSIM). In this case, the electronic device 101 may further include at least one slot for connection with the rSIM. In an embodiment, the rSIM is removable from the electronic device 101 and does not necessarily need to be included in the electronic device 101. At least one of the first SIM 331 or the second SIM 341 may be an embedded subscriber identity module (eSIM). The rSIM may be referred to as a "physical SIM (pSIM)".

According to an embodiment, the communication processor 310 may support a specified number (e.g., two) of SIMs. Although not shown in FIG. 3, the electronic device 101 may include SIMs (e.g., two rSIMs and one eSIM) whose number is greater than a specified number. In this case, the electronic device 101 may further include a switch (not shown in FIG. 3) for converting a SIM connection between a plurality of SIMs and the communication processor 310.

According to an embodiment, the communication processor 310 may support establishment of a communication channel of a band to be used for a wireless communication and a network communication through the established communication channel. For example, the communication processor 510 may support at least one of a 2^{nd} generation (2G) network communication, a 3^{rd} generation (3G) network communication, a 4^{th} generation (4G) network communication, or a 5^{th} generation (5G) network communication.

The RF circuit 320 may include at least one of a radio frequency integrated circuit (RFIC), a radio frequency front end (RFFE) module, or an antenna module (e.g., an antenna module 197 in FIG. 1). The RF circuit 320 may convert data (e.g., a baseband signal) outputted from the communication processor 310 into an RF signal and transmit the RF signal via the antenna module. The RF circuit 320 may convert an RF signal received via the antenna module into a baseband signal and transfer the baseband signal to the communication processor 310. The RF circuit 320 may process an RF signal or a baseband signal based on a communication scheme supported by the communication processor 310, and a type of the RF circuit 320 is not limited. According to an embodiment, an interface between components may be implemented as a general purpose input/output (GPIO), universal asynchronous receiver/transmitter (UART)(e.g., high speed-UART (HS-UART)), or peripheral component interconnect bus express (PCIe) interface, and there is no limitation on the interface between the components. Alternatively, at least some of the components may exchange control information or packet data information using a shared memory.

Although FIG. 3 shows a case in which the processor 120 and the communication processor 310 are implemented as separate hardware, this is merely illustrative. The processor 120 and the communication processor 310 may be implemented as separate hardware, and the processor 120 and the communication processor 310 may also be implemented on a single chip.

The communication processor 310 may obtain stored information from the first SIM 331 and the second SIM 341. For example, the stored information may include at least one of an integrated circuit card identifier (ICCID), an IMSI, home public land mobile network (HPLMN) related information, or a mobile subscriber international ISDN number (MSISIDN). The stored information may also be referred to as an elementary file (EF). The communication processor 310 may perform, via the RF circuit 320, an authentication procedure for a network communication which corresponds to the first SIM 331 and/or the second SIM 341 based on the obtained information stored in the first SIM 331 and/or the second SIM 341. If authentication is successful, the communication processor 310 may perform, via the RF circuit 320, a network communication which corresponds to the first SIM 331 and/or the second SIM 341.

According to an embodiment, the communication processor 310 may perform network communications of dual SIM according to the first SIM 331 or the second SIM 341. Depending on implementation of the RF circuit 320, the network communications of the dual SIM may be performed in one of a DSDS mode or a DSDA mode.

According to an embodiment, the communication processor 310 may include two stacks (e.g., a stack according to ISO7816) for processing a SIM, and the first SIM 331 and the second SIM 332 may be connected to the two stacks. For example, a first slot 330 may be connected to one stack, and a second slot 340 may be connected to another stack.

According to an embodiment of the disclosure, an electronic device (101) may comprise communication circuitry (190; 320), one or more processors (120; 310) including processing circuitry, and memory (130) storing instructions.

According to an embodiment of the disclosure, the instructions, when executed by the one or more processors individually or collectively, may cause the electronic device to transmit, to an external electronic device (108; 600) via the communication circuitry, a first message including first information related to a first wake-up period, which is preferred by the electronic device and corresponds to a communication service, and second information related to a device which performs a keep-alive operation.

According to an embodiment of the disclosure, the instructions, when executed by the one or more processors individually or collectively, may cause the electronic device to, in response to the first message, receive, from the external electronic device via the communication circuitry, a second message including third information related to a second wake-up period, which is preferred by the external electronic device and corresponds to the communication service, and fourth information related to a device which performs the keep-alive operation, the fourth information being associated with the second information.

According to an embodiment of the disclosure, the instructions, when executed by the one or more processors individually or collectively, may cause the electronic device to perform the keep-alive operation based on the fourth information and fifth information related to a wake-up period which is associated with the first information and the third information and corresponds to the communication service.

According to an embodiment of the disclosure, the instructions, when executed by the one or more processors individually or collectively, may cause the electronic device to, if the first information includes a first range used for setting the first wake-up period, and the third information includes a second range used for setting the second wake-up period, identify the fifth information based on the first range and the second range.

According to an embodiment of the disclosure, the instructions, when executed by the one or more processors individually or collectively, may cause the electronic device to, if the first information includes a first range used for setting the first wake-up period, and the third information includes a second range used for setting the second wake-up period, identify a value within a range which is an intersection of the first range and the second range as the fifth information.

According to an embodiment of the disclosure, the instructions, when executed by the one or more processors individually or collectively, may cause the electronic device to identify not to perform the keep-alive operation based on the fourth information.

According to an embodiment of the disclosure, the instructions, when executed by the one or more processors individually or collectively, may cause the electronic device to receive, from the external electronic device via the communication circuitry, a third message including sixth information related to a third wake-up period, which is preferred by the external electronic device and corresponds to the communication service, and seventh information related to a device which performs the keep-alive operation.

According to an embodiment of the disclosure, the instructions, when executed by the one or more processors individually or collectively, may cause the electronic device to, in response to the third message, transmit, to the external electronic device via the communication circuitry, a fourth message including the sixth information and eighth information related to a device which performs the keep-alive operation.

According to an embodiment of the disclosure, the instructions, when executed by the one or more processors individually or collectively, may cause the electronic device to perform the keep-alive operation based on the sixth information.

According to an embodiment of the disclosure, an electronic device (101) may comprise communication circuitry (190; 320), one or more processors (120; 310) including processing circuitry, and memory (130) storing instructions.

According to an embodiment of the disclosure, the instructions, when executed by the one or more processors individually or collectively, may cause the electronic device to identify whether a set condition related to a change in a wake-up period corresponding to a communication service is satisfied while performing a keep-alive operation with an external electronic device (108; 600) based on the wake-up period.

According to an embodiment of the disclosure, the instructions, when executed by the one or more processors individually or collectively, may cause the electronic device to, based on identifying that the set condition is satisfied, transmit, to the external electronic device via the communication circuitry, a first message including first information related to a first wake-up period, which is preferred by the electronic device and corresponds to the communication service, and second information related to a device which performs the keep-alive operation.

According to an embodiment of the disclosure, the instructions, when executed by the one or more processors individually or collectively, may cause the electronic device to, in response to the first message, receive, from the external electronic device via the communication circuitry, a second message including third information related to a second wake-up period, which is preferred by the external electronic device and corresponds to the communication service, and fourth information related to a device which performs the keep-alive operation, the fourth information being associated with the second information.

According to an embodiment of the disclosure, the instructions, when executed by the one or more processors individually or collectively, may cause the electronic device to perform the keep-alive operation based on the fourth information and fifth information related to a changed wake-up period which is associated with the first information and the third information.

According to an embodiment of the disclosure, the instructions, when executed by the one or more processors individually or collectively, may cause the electronic device to, if the first information includes a first range used for setting the first wake-up period, and the third information includes a second range used for setting the second wake-up period, identify the fifth information based on the first range and the second range.

According to an embodiment of the disclosure, the instructions, when executed by the one or more processors individually or collectively, may cause the electronic device to, if the first information includes a first range used for setting the first wake-up period, and the third information includes a second range used for setting the second wake-up period, identify a value within a range which is an intersection of the first range and the second range as the fifth information.

According to an embodiment of the disclosure, the set condition may include at least one of a condition that a remaining battery level is less than a threshold remaining battery level, a condition that reception strength is less than threshold reception strength, a condition that a detected temperature is higher than or equal to a threshold temperature, a condition that the electronic device is in a roaming state, or a condition that the electronic device operates in a power saving mode.

According to an embodiment of the disclosure, an electronic device (101) may comprise communication circuitry (190; 320), one or more processors (120; 310) including processing circuitry, and memory (130) storing instructions.

According to an embodiment of the disclosure, the instructions that, when executed by the one or more processors individually or collectively, cause the electronic device to transmit, to a first external electronic device (111a) via the communication circuitry, a first message including first information related to a first wake-up period, which is preferred by the electronic device and corresponds to a first communication service, and second information related to a device which performs a keep-alive operation.

According to an embodiment of the disclosure, the instructions that, when executed by the one or more processors individually or collectively, cause the electronic device to transmit, to a second external electronic device (111b) via the communication circuitry, a second message including third information related to a second wake-up period, which is preferred by the electronic device and corresponds to a second communication service, and fourth information related to a device which performs the keep-alive operation.

According to an embodiment of the disclosure, the instructions that, when executed by the one or more processors individually or collectively, cause the electronic device to, in response to the first message, receive, from the first external electronic device via the communication circuitry, a third message including fifth information related to a third wake-up period which is preferred by the first external electronic device and corresponds to the first communication service, and sixth information related to a device performing the keep-alive operation, the sixth information being associated with the second information.

According to an embodiment of the disclosure, the instructions that, when executed by the one or more processors individually or collectively, cause the electronic device to, in response to the second message, receive, from the second external electronic device via the communication circuitry, a fourth message including seventh information related to a fourth wake-up period which is preferred by the second external electronic device and corresponds to the second communication service, and eighth information related to a device performing the keep-alive operation, the eighth information being associated with the fourth information.

According to an embodiment of the disclosure, the instructions that, when executed by the one or more processors individually or collectively, cause the electronic device to perform the keep-alive operation based on the sixth information, the eighth information, and ninth information related to a wake-up period corresponding to the first communication service and the second communication service, the ninth information being associated with the fifth information and the seventh information.

According to an embodiment of the disclosure, the instructions that, when executed by the one or more processors individually or collectively, cause the electronic device to, if the fifth information includes a first range used for setting the third wake-up period, and the seventh information includes a second range used for setting the fourth wake-up period, identify the ninth information based on the first range and the second range.

According to an embodiment of the disclosure, the instructions that, when executed by the one or more processors individually or collectively, cause the electronic device to, if the fifth information includes a first range used for setting the third wake-up period, and the seventh information includes a second range used for setting the fourth wake-up period, identify a value within a range which is an intersection of the first range and the second range as the ninth information.

According to an embodiment of the disclosure, the instructions that, when executed by the one or more processors individually or collectively, cause the electronic device to, if the sixth information indicates that the first external electronic device is a device which accepts initiation of the keep-alive operation by the electronic device, and the eighth information indicates that the second external electronic device is a device which accepts initiation of the keep-alive operation by the electronic device, transmit a keep-alive request message to each of the first external electronic device and the second external electronic device via the communication circuitry.

According to an embodiment of the disclosure, the instructions that, when executed by the one or more processors individually or collectively, cause the electronic device to, in response to the keep-alive request message, receive a keep-alive response message from each of the first external electronic device and the second external electronic device via the communication circuitry.

According to an embodiment of the disclosure, the instructions that, when executed by the one or more processors individually or collectively, cause the electronic device to, if the sixth information indicates that the first external electronic device is a device which initiates the keep-alive operation, and the eighth information indicates that the second external electronic device initiates the keep-alive operation, receive a keep-alive request message from each of the first external electronic device and the second external electronic device via the communication circuitry.

According to an embodiment of the disclosure, the instructions that, when executed by the one or more processors individually or collectively, cause the electronic device to, in response to the keep-alive request message, transmit a keep-alive response message to each of the first external electronic device and the second external electronic device via the communication circuitry.

According to an embodiment of the disclosure, the instructions that, when executed by the one or more processors individually or collectively, cause the electronic device to, if the sixth information indicates that the first external electronic device is a device performing the keep-alive operation based on a setting of a counterpart device, the second information indicates that the electronic device is a device initiating the keep-alive operation, the eighth information indicates that the second external electronic device is a device performing the keep-alive operation based on a setting of a counterpart device, and the fourth information indicates that the electronic device is the device initiating the keep-alive operation, transmit a keep-alive request message to each of the first external electronic device and the second external electronic device via the communication circuitry.

According to an embodiment of the disclosure, the instructions that, when executed by the one or more processors individually or collectively, cause the electronic device to, in response to the keep-alive request message, receive a keep-alive response message from each of the first external electronic device and the second external electronic device via the communication circuitry.

According to an embodiment of the disclosure, the instructions that, when executed by the one or more processors individually or collectively, cause the electronic device to, if the sixth information indicates that the first external electronic device is a device performing the keep-alive operation based on a setting of a counterpart device, the second information indicates that the electronic device is a device accepting the keep-alive operation, the eighth information indicates that the second external electronic device is a device performing the keep-alive operation based on a setting of a counterpart device, and the fourth information indicates that the electronic device is a device accepting initiation of the keep-alive operation by the second external electronic device, receive a keep-alive request message from each of the first external electronic device and the second external electronic device via the communication circuitry.

According to an embodiment of the disclosure, the instructions that, when executed by the one or more processors individually or collectively, cause the electronic device to, in response to the keep-alive request message, transmit a keep-alive response message to each of the first external electronic device and the second external electronic device via the communication circuitry.

According to an embodiment of the disclosure, the instructions that, when executed by the one or more processors individually or collectively, cause the electronic device to identify not to perform the keep-alive operation based on the sixth information and the eighth information.

According to an embodiment of the disclosure, the instructions that, when executed by the one or more processors individually or collectively, cause the electronic device to receive, from the first external electronic device via the communication circuitry, a fifth message comprising tenth information related to a fifth wake-up period which is preferred by the first external electronic device and corresponds to the first communication service, and eleventh information related to a device performing the keep-alive operation.

According to an embodiment of the disclosure, the instructions that, when executed by the one or more processors individually or collectively, cause the electronic device to receive, from the second external electronic device, a sixth message including twelfth information related to a sixth wake-up period which is preferred by the second external electronic device and corresponds to the second communication service, and thirteenth information related to a device performing the keep-alive operation.

According to an embodiment of the disclosure, the instructions that, when executed by the one or more processors individually or collectively, cause the electronic device to, in response to the fifth message, transmit, to the first external electronic device via the communication circuitry, a seventh message including the tenth information and fourteenth information related to a device performing the keep-alive operation.

According to an embodiment of the disclosure, the instructions that, when executed by the one or more processors individually or collectively, cause the electronic device to, in response to the sixth message, transmit, to the second external electronic device via the communication circuitry, an eighth message including the twelfth information and fifteenth information related to a device performing the keep-alive operation.

According to an embodiment of the disclosure, the instructions that, when executed by the one or more processors individually or collectively, cause the electronic device to, based on the tenth information and the twelfth information, identify sixteenth information related to a wake-up period corresponding to the first communication service and the second communication service.

According to an embodiment of the disclosure, the instructions that, when executed by the one or more processors individually or collectively, cause the electronic device to perform the set operation based on the sixteenth information.

According to an embodiment of the disclosure, the instructions that, when executed by the one or more processors individually or collectively, cause the electronic device to, if the tenth information includes a third range used for setting the fifth wake-up period and the twelfth information includes a fourth range used for setting the sixth wake-up period, identify the sixteenth information based on the third range and the fourth range.

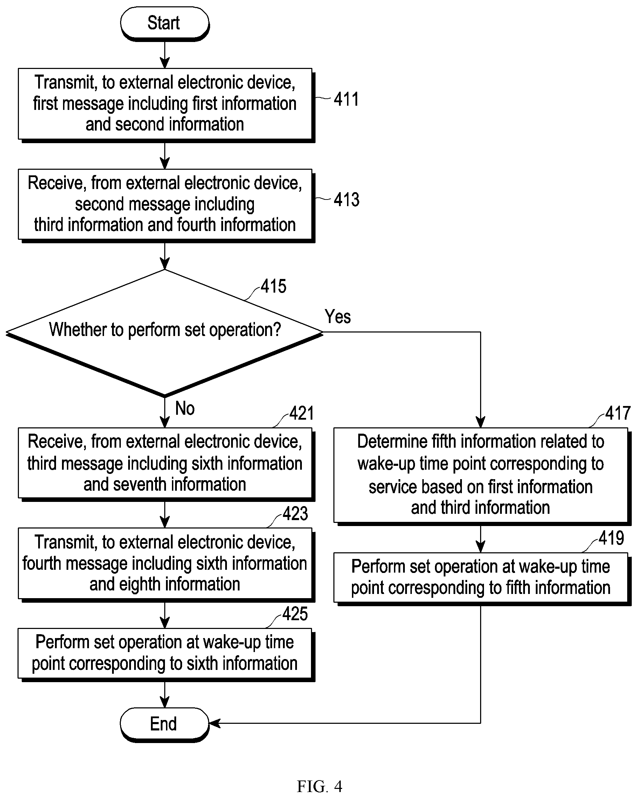

FIG. 4 is a flowchart illustrating an operating process of an electronic device, according to an embodiment.

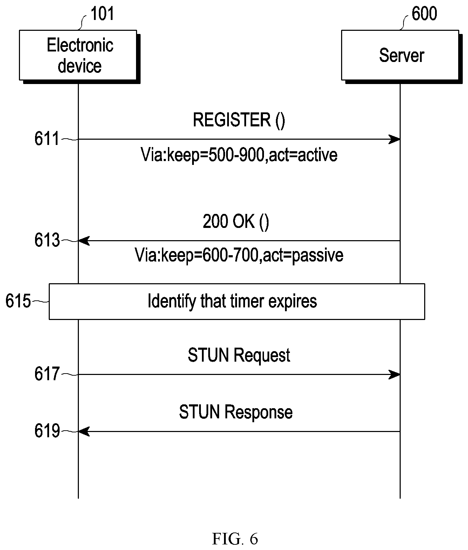

Referring to FIG. 4, an electronic device (e.g., an electronic device 101 in FIG. 1A, 1B, 2, or 3) (e.g., a processor 120 in FIG. 1A or 3, or a communication processor 310 in FIG. 3) may transmit, to an external electronic device (e.g., a server 108 in FIG. 1A or a server 600 in FIG. 6), a first message including first information related to a first wake-up time point which is preferred by the electronic device and corresponds to a service (e.g., a first service and/or a second service) and second information related to a device performing a set operation in operation 411. For example, the first service may be a VoLTE service, and the second service may be an RCS service. In an embodiment, the electronic device may transmit the first message to the server as the electronic device initiates an Internet protocol (IP) multimedia subsystem (IMS) registration procedure with the server. In this case, the first message may be a registration message. The registration message may be a session initiation protocol (SIP) registration message. In an embodiment, the electronic device may transmit the first message to the server as the electronic device originates a call. In this case, the first message may be an invite message.

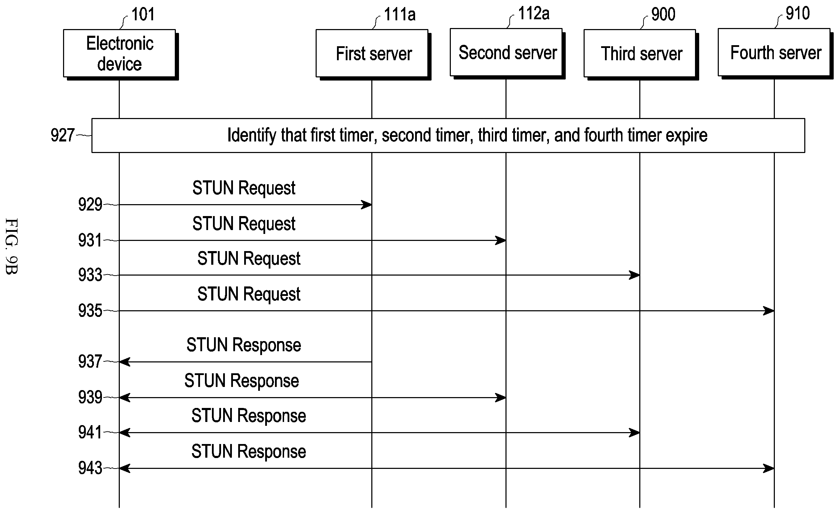

In an embodiment, the first information may be a first timer value range used for setting a first wake-up time point of a timer corresponding to the service. For example, the first information may be a parameter value of a parameter keep included in the registration message or the invite message. In an embodiment, the parameter value of the parameter keep may indicate a keep-alive frequency and may be set as a value in a range unit. The parameter keep may be included in a Via header field parameter included in the registration message or the invite message, and the parameter keep and the parameter value of the parameter keep will be described below with reference to FIGS. 6 to 9A and 9B, so a detailed description thereof will be omitted herein.

In an embodiment, the set operation may include a keep-alive operation (e.g., an operation of transmitting and/or receiving a keep-alive request message and/or a keep-alive response message). For example, the keep-alive request message may be a session traversal utilities for NAT(network address translation) (STUN) request message, and the keep-alive response message may be a STUN response message.

In an embodiment, the second information may indicate information related to the device performing the set operation (e.g., the keep-alive operation) (e.g., an endpoint device performing the set operation). For example, the second information may be a parameter value of a parameter act included in the registration message or the invite message. The parameter act and the parameter value of the parameter act will be described below with reference to FIGS. 6 to 9A and 9B, so a detailed description thereof will be omitted herein.

The electronic device, which transmits the first message, may receive, from the external electronic device, a second message including third information related to a second wake-up time point which is preferred by the external electronic device and corresponding to the service and fourth information related to a device performing the set operation, in response to the first message in operation 413. In an embodiment, the second message may be a 200 OK message which is a response message to the registration message or a 200 OK message which is a response message to the invite message.

In an embodiment, the third information may be a second timer value range used for setting the second wake-up time point of a timer corresponding to the service. For example, the third information may be a parameter value of a parameter keep included in the 200 OK message for the registration message or the 200 OK message for the invite message. The parameter keep may be included in a Via header field parameter included in the 200 OK message for the registration message or the 200 OK message for the invite message.

In an embodiment, the fourth information may indicate information related to the device performing the set operation (e.g., the keep-alive operation) (e.g., an endpoint device performing the set operation). For example, the fourth information may be a parameter value of a parameter act included in the 200 OK message.

The electronic device, which receives the second message, may identify, in operation 415, whether to perform the set operation based on the fourth information. In an embodiment, the electronic device may identify whether to perform the set operation based on the parameter act included in the second message, this will be described below with reference to FIGS. 6 to 9A and 9B, so a detailed description thereof will be omitted herein.

When identifying to perform the set operation (Operation 415-YES), the electronic device may determine, in operation 417, fifth information related to a wake-up time point corresponding to the service based on the first information and the third information. In an embodiment, since the first information is the first timer value range used for setting the first wake-up time point of the timer corresponding to the service and the third information is the second timer value range used for setting the second wake-up time point of the timer, the electronic device may determine the fifth information based on the first timer value range and the second timer value range. In an embodiment, since the first information is the first timer value range used for setting the first wake-up time point of the timer corresponding to the service and the third information is the second timer value range used for setting the second wake-up time point of the timer, the electronic device may determine, as the fifth information, any one value among timer value range values which are an intersection of the first timer value range and the second timer value range.

The electronic device, which determines the fifth information, may perform, in operation 419, the set operation (e.g., the keep-alive operation) at a wake-up time point corresponding to the fifth information.

In an embodiment, if the fourth information indicates that the external electronic device is a device which accepts the set operation, the set operation may include an operation of transmitting a keep-alive request message to the external electronic device, and an operation of receiving a keep-alive response message from the external electronic device in response to the keep-alive request message.

In an embodiment, if the fourth information indicates that the external electronic device is a device which initiates the set operation, the set operation may include an operation of receiving a keep-alive request message from the external electronic device, and an operation of transmitting a keep-alive response message to the external electronic device in response to the keep-alive request message.

In an embodiment, if the fourth information indicates that the external electronic device is a device which performs the set operation based on a setting of a counterpart device, and the second information indicates that the electronic device is the device which initiates the set operation, the set operation may include an operation of transmitting a keep-alive request message to the external electronic device, and an operation of receiving a keep-alive response message from the external electronic device in response to the keep-alive request message.

In an embodiment, if the fourth information indicates that the external electronic device is a device which performs the set operation based on a setting of a counterpart device, and the second information indicates that the electronic device is the device which accepts the set operation, the set operation may include an operation of receiving a keep-alive request message from the external electronic device, and an operation of transmitting a keep-alive response message to the external electronic device in response to the keep-alive request message.

When identifying not to perform the set operation (Operation 415-NO), the electronic device may receive, in operation 421, a third message including sixth information related to a third wake-up time point which is preferred by the external electronic device and corresponds to the service and seventh information related to a device performing the set operation, from the external electronic device. In an embodiment, the third message may be an update message.

In an embodiment, the sixth information may be a third timer value range used for setting the third wake-up time point of a timer corresponding to the service. For example, the sixth information may be a parameter value of a parameter keep included in the update message. The parameter keep may be included in a Via header field parameter included in the update message.

In an embodiment, the seventh information may indicate information related to the device performing the set operation (e.g., a keep-alive operation) (e.g., an endpoint device performing the set operation). For example, the seventh information may be a parameter value of a parameter act included in the update message.

The electronic device, which receives the third message from the external electronic device, may transmit, in operation 423, a fourth message including the sixth information and eighth information related to a device performing the set operation, to the external electronic device. In an embodiment, the fourth message may be a 200 OK message which is a response message to the update message. In an embodiment, the eighth information may indicate information related to the device performing the set operation (e.g., the keep-alive operation) (e.g., an endpoint device performing the set operation). For example, the eighth information may be a parameter value of a parameter act included in the 200 OK message.

The electronic device, which transmits the fourth message to the external electronic device, may perform, in operation 425, the set operation (e.g., the keep-alive operation) at a wake-up time point corresponding to the sixth information.

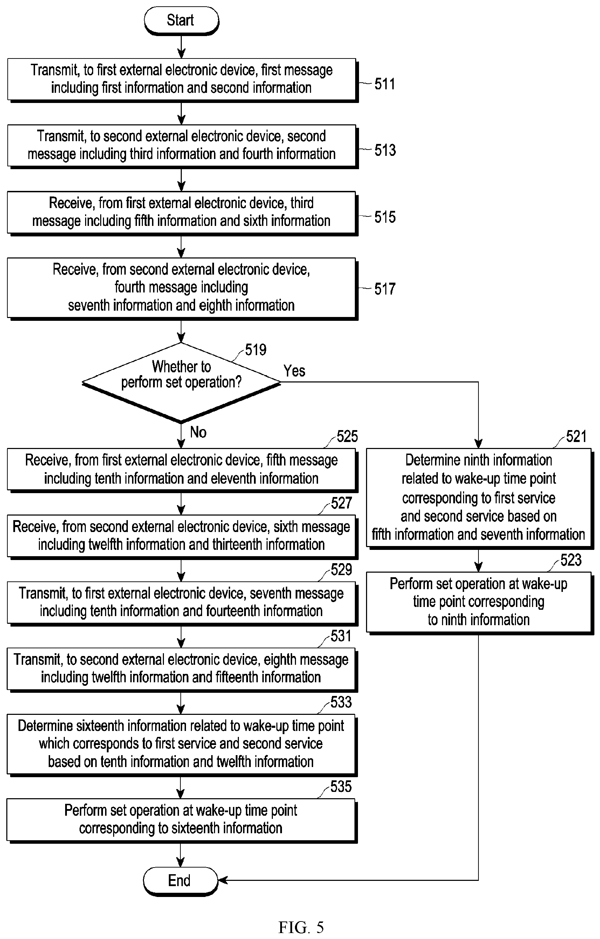

FIG. 5 is a flowchart illustrating an operating process of an electronic device, according to an embodiment.

Referring to FIG. 5, an electronic device (e.g., an electronic device 101 in FIG. 1A, 1B, 2, or 3) (e.g., a processor 120 in FIG. 1A or 3, or a communication processor 310 in FIG. 3) may transmit, to a first external electronic device (e.g., a first server 111a in FIG. 1B), a first message including first information related to a first wake-up time point which is preferred by the electronic device and corresponds to a first service and second information related to a device performing a set operation in operation 511. For example, the first service may be a VoLTE service. In an embodiment, the electronic device may transmit the first message to the first server as the electronic device initiates an IMS registration procedure with the first server. In this case, the first message may be a registration message. The registration message may be a SIP registration message. In an embodiment, the electronic device may transmit the first message to the first server as the electronic device originates a call. In this case, the first message may be an invite message.

In an embodiment, the first information may be a timer value range used for setting a first wake-up time point of a timer corresponding to the first service. For example, the first information may be a parameter value of a parameter keep included in the registration message or the invite message. The parameter keep may be included in a Via header field parameter included in the registration message or the invite message, and the parameter keep and the parameter value of the parameter keep will be described below with reference to FIGS. 6 to 9A and 9B, so a detailed description thereof will be omitted herein.

In an embodiment, the second information may indicate information related to the device performing the set operation (e.g., the keep-alive operation) (e.g., an endpoint device performing the set operation). For example, the second information may be a parameter value of a parameter act included in the registration message or the invite message. The parameter act and the parameter value of the parameter act will be described below with reference to FIGS. 6 to 9A and 9B, so a detailed description thereof will be omitted herein.

The electronic device, which transmits the first message, may transmit, to a second external electronic device (e.g., a second server 112a in FIG. 1B), a second message including third information related to a second wake-up time point which is preferred by the electronic device and corresponds to a second service and fourth information related to a device performing a set operation in operation 513. For example, the second service may be an RCS service. In an embodiment, the electronic device may transmit the second message to the second server as the electronic device initiates an IMS registration procedure with the second server. In this case, the second message may be a registration message. The registration message may be a SIP registration message. In an embodiment, the electronic device may transmit the second message to the second server as the electronic device originates a call. In this case, the second message may be an invite message.

In an embodiment, the third information may be a timer value range used for setting a second wake-up time point of a timer corresponding to the second service. For example, the first information may be a parameter value of a parameter keep included in the registration message or the invite message. The parameter keep may be included in a Via header field parameter included in the registration message or the invite message.

In an embodiment, the fourth information may indicate information related to the device performing the set operation (e.g., the keep-alive operation) (e.g., an endpoint device performing the set operation). For example, the fourth information may be a parameter value of a parameter act included in the registration message or the invite message.

The electronic device, which transmits the second message, may receive, from the first external electronic device, a third message including fifth information related to a third wake-up time point which is preferred by the first external electronic device and corresponding to the first service and sixth information related to a device performing the set operation, in response to the first message in operation 515. In an embodiment, the third message may be a 200 OK message which is a response message to the registration message or a 200 OK message which is a response message to the invite message.

In an embodiment, the fifth information may be a timer value range used for setting the third wake-up time point of a timer corresponding to the first service. For example, the fifth information may be a parameter value of a parameter keep included in the 200 OK message for the registration message or the 200 OK message for the invite message. The parameter keep may be included in a Via header field parameter included in the 200 OK message for the registration message or the 200 OK message for the invite message.

In an embodiment, the sixth information may indicate information related to the device performing the set operation (e.g., the keep-alive operation) (e.g., an endpoint device performing the set operation). For example, the sixth information may be a parameter value of a parameter act included in the 200 OK message.

The electronic device, which receives the third message, may receive, from the second external electronic device, a fourth message including seventh information related to a fourth wake-up time point which is preferred by the second external electronic device and corresponding to the second service and eighth information related to a device performing the set operation, in response to the second message in operation 517. In an embodiment, the fourth message may be a 200 OK message which is a response message to the registration message or a 200 OK message which is a response message to the invite message.

In an embodiment, the seventh information may be a timer value range used for setting the fourth wake-up time point of a timer corresponding to the second service. For example, the seventh information may be a parameter value of a parameter keep included in the 200 OK message for the registration message or the 200 OK message for the invite message. The parameter keep may be included in a Via header field parameter included in the 200 OK message for the registration message or the 200 OK message for the invite message.

In an embodiment, the eighth information may indicate information related to the device performing the set operation (e.g., the keep-alive operation) (e.g., an endpoint device performing the set operation). For example, the eighth information may be a parameter value of a parameter act included in the 200 OK message.

The electronic device, which receives the fourth message, may identify, in operation 519, whether to perform the set operation based on the sixth information and the eighth information. In an embodiment, the electronic device may identify whether to perform the set operation based on the parameter act included in the third message and the fourth message, this will be described below with reference to FIGS. 6 to 9A and 9B, so a detailed description thereof will be omitted herein.

When identifying to perform the set operation (Operation 519-YES), the electronic device may determine, in operation 521, ninth information related to a wake-up time point corresponding to the first service and the second service based on the fifth information and the seventh information. In an embodiment, since the fifth information is the first timer value range used for setting the third wake-up time point of the timer corresponding to the first service and the seventh information is the second timer value range used for setting the fourth wake-up time point of the timer corresponding to the second service, the electronic device may determine the ninth information based on the first timer value range and the second timer value range. In an embodiment, since the fifth information is the first timer value range used for setting the third wake-up time point of the timer corresponding to the first service and the seventh information is the second timer value range used for setting the fourth wake-up time point of the timer corresponding to the second service, the electronic device may determine, as the ninth information, any one value among timer value range values which are an intersection of the first timer value range and the second timer value range.

The electronic device, which determines the ninth information, may perform, in operation 523, the set operation (e.g., the keep-alive operation) at a wake-up time point corresponding to the ninth information.

In an embodiment, if the sixth information indicates that the first external electronic device is a device which accepts the set operation and the eighth information indicates that the second external electronic device is a device which accepts the set operation, the set operation may include an operation of transmitting a keep-alive request message to each of the first external electronic device and the second external electronic device, and an operation of receiving, in response to the keep-alive request message, a keep-alive response message from each of the first external electronic device and the second external electronic device.

In an embodiment, if the sixth information indicates that the first external electronic device is a device which initiates the set operation and the eighth information indicates that the second external electronic device is a device which initiates the set operation, the set operation may include an operation of receiving a keep-alive request message from each of the first external electronic device and the second external electronic device, and an operation of transmitting, in response to the keep-alive request message, a keep-alive response message to each of the first external electronic device and the second external electronic device.

In an embodiment, if the sixth information indicates that the first external electronic device is a device which performs the set operation based on a setting of a counterpart device, the second information indicates that the electronic device is a device which initiates the set operation, the eighth information indicates that the second external electronic device is a device which performs the set operation based on a setting of a counterpart device, and the fourth information indicates that the electronic device is the device which initiates the set operation, the set operation may include an operation of transmitting a keep-alive request message to each of the first external electronic device and the second external electronic device, and an operation of receiving a keep-alive response message from each of the first external electronic device and the second external electronic device in response to the keep-alive request message.

In an embodiment, if the sixth information indicates that the first external electronic device is the device which performs the set operation based on the setting of a counterpart device, the second information indicates that the electronic device is a device which accepts the set operation, the eighth information indicates that the second external electronic device is the device which performs the set operation based on the setting of a counterpart device, and the fourth information indicates that the electronic device is a device which accepts the set operation, the set operation may include an operation of receiving a keep-alive request message from each of the first external electronic device and the second external electronic device, and an operation of transmitting a keep-alive response message to each of the first external electronic device and the second external electronic device in response to the keep-alive request message.

When identifying not to perform the set operation (Operation 519-NO), the electronic device may receive, in operation 525, a fifth message including tenth information related to a fifth wake-up time point which is preferred by the first external electronic device and corresponds to the first service and eleventh information related to a device performing the set operation, from the first external electronic device. In an embodiment, the fifth message may be an update message.

In an embodiment, the tenth information may be timer value range used for setting the fifth wake-up time point of a timer corresponding to the first service. For example, the tenth information may be a parameter value of a parameter keep included in the update message. The parameter keep may be included in a Via header field parameter included in the update message.

In an embodiment, the eleventh information may indicate information related to the device performing the set operation (e.g., a keep-alive operation) (e.g., an endpoint device performing the set operation). For example, the eleventh information may be a parameter value of a parameter act included in the update message.

The electronic device, which receives the fifth message, may receive, from the second external electronic device, a sixth message including twelfth information related to a sixth wake-up time point which is preferred by the second external electronic device and corresponding to the second service and thirteenth information related to a device performing the set operation in operation 527. In an embodiment, the sixth message may be an update message.

In an embodiment, the twelfth information may be a timer value range used for setting the sixth wake-up time point of a timer corresponding to the second service. For example, the twelfth information may be a parameter value of a parameter keep included in the update message. The parameter keep may be included in a Via header field parameter included in the update message.

In an embodiment, the thirteenth information may indicate information related to the device performing the set operation (e.g., the keep-alive operation) (e.g., an endpoint device performing the set operation). For example, the thirteenth information may be a parameter value of a parameter act included in the update message.

The electronic device, which receives the sixth message from the second external electronic device, may transmit, to the first external electronic device, a seventh message including tenth information and fourteenth information related to a device performing the set operation in operation 529. In an embodiment, the seventh message may be a 200 OK message, which is a response message to the update message. In an embodiment, the fourteenth information may indicate information related to the device performing the set operation (e.g., the keep-alive operation) (e.g., an endpoint device performing the set operation). For example, the fourteenth information may be a parameter value of a parameter act included in the 200 OK message.

The electronic device, which transmits the seventh message to the first external electronic device, may transmit, to the second external electronic device, an eighth message including twelfth information and fifteenth information related to a device performing the set operation in operation 531. In an embodiment, the eighth message may be a 200 OK message, which is a response message to the update message. In an embodiment, the fifteenth information may indicate information related to a device performing the set operation (e.g., the keep-alive operation) (e.g., an endpoint device performing the set operation). For example, the fifteenth information may be a parameter value of a parameter act included in the 200 OK message.

The electronic device, which transmits the eighth message to the second external electronic device, may determine sixteenth information related to a wake-up time point which corresponds to the first service and the second service based on the tenth information and the twelfth information in operation 533. In an embodiment, if the tenth information is a third timer value range used for setting a fifth wake-up time point of a timer corresponding to the first service and the twelfth information is a fourth timer value range used for setting a sixth wake-up time point of a timer corresponding to the second service, the electronic device may determine the sixteenth information based on the third timer value range and the fourth timer value range.

The electronic device, which determines the sixteenth information, may perform the set operation (e.g., the keep-alive operation) at a wake-up time point corresponding to the sixteenth information in operation 535.

FIG. 6 is a signal flow diagram illustrating a process of managing wake-up time points in a wireless communication network, according to an embodiment.

Referring to FIG. 6, a wireless communication network may include an electronic device 101 (e.g., an electronic device 101 in FIG. 1A, 1B, 2, or 3), and/or a server 600 (e.g., a server 108 in FIG. 1A, or a first server 111a or a second server 112a in FIG. 1B). In an embodiment, the server 600 may provide a first service (e.g., a VoLTE service) and/or a second service (e.g., an RCS service). A process of managing wake-up time points illustrated in FIG. 6 may be a process of managing wake-up time points performed if the electronic device 101 is in an idle state. In an embodiment, the idle state may be an idle state after the electronic device 101 is registered with an Internet protocol (IP) multimedia subsystem (IMS) server (not separately illustrated in FIG. 6).

In operation 611, as the electronic device 101 initiates an IMS registration procedure with the server 600, the electronic device 101 may transmit a registration message to the server 600. The registration message may be a session initiation protocol (SIP) registration message. The registration message may include Via header field parameters. In an embodiment, the Via header field parameters included in the registration message may include keep and/or act. In an embodiment, the Via header field parameters included in the registration message may further include an identity (ID) of a device (e.g., the electronic device 101) transmitting the registration message. In an embodiment, the ID of the device transmitting the registration message may include an IMSI and/or an IP multimedia public identity (IMPU) of the device transmitting the registration message. In an embodiment, the parameter keep may indicate a willingness of a SIP entity (e.g., the electronic device 101) to transmit a keep-alive message (e.g., a keep-alive request message) to an adjacent downstream SIP entity (e.g., the server 600). In an embodiment, the adjacent downstream SIP entity may be an adjacent SIP entity to which a SIP request message is transmitted. The SIP request message may be the keep-alive request message (or a session traversal utilities for network address translation (NAT) (STUN) request message). In an embodiment, a parameter value of the parameter keep may indicate a keep-alive frequency and may be set to a value in a range unit. According to an embodiment, since the electronic device 101 may set the parameter value of the parameter keep, a keep-alive operation suitable for status (e.g., current status) of the electronic device 101, may be performed, and in this case, unnecessary consumption of resources (e.g., current) due to a keep-alive operation of a relatively short period may be decreased. For example, if a battery level of the electronic device 101 is low, it may be preferable to perform the keep-alive operation at a relatively long period, and in this case, the electronic device 101 may decrease battery consumption by setting the parameter value of the parameter keep to a relatively large value.

In an embodiment, the parameter value of the parameter keep may be information related to a wake-up time point of the electronic device 101 which corresponds to the service (e.g., the first service and/or the second service). For example, the electronic device 101 may configure a timer for the service, and may set a timer value of the timer to a value (hereinafter, referred to as an "intersection value" for convenience of a description) determined based on the parameter value of the parameter keep included in the registration message and a parameter value of a parameter keep included in a 200 OK message received in response to the registration message. In this case, the electronic device 101 may wake up at an expiration time point of the timer (e.g., a time point at which the timer set to the intersection value expires) to perform a set operation (e.g., a keep-alive operation). In an embodiment, the keep-alive operation may include an operation of transmitting the keep-alive request message (or the STUN request message) to the server 600, and an operation of receiving, from the server 600, a keep-alive response message which is a response message to the keep-alive request message (or a STUN response message which is a response message to the STUN request message).

In an embodiment, the parameter value of the parameter keep included in the registration message transmitted by the electronic device 101 may indicate a keep-alive frequency preferred by the electronic device 101. For example, the keep-alive frequency may be given in a second range unit or a minute range unit. In FIG. 6, for example, it will be assumed that the value of the parameter keep included in the registration message transmitted in operation 611 is set to a range of "500-900 seconds (sec)".

In an embodiment, the parameter act may indicate information related to a device (e.g., an endpoint device performing a set operation) performing the set operation (e.g., the keep-alive operation). For example, the parameter act may be set to any one of a total of four parameter values as follows.

### (1) active

If a value of the parameter act is set to "active", this may indicate that a device transmitting a message including the parameter act whose parameter value is set to "active" is an endpoint device which initiates the keep-alive operation. Initiating the keep-alive operation may indicate transmitting the keep-alive request message.

### (2) passive

If the value of the parameter act is set to "passive", this may indicate that a device transmitting a message including the parameter act whose parameter value is set to "passive" is an endpoint device which accepts the keep-alive operation. Accepting the keep-alive operation may indicate transmitting the keep-alive response message in response to the keep-alive request message.

### (3) actpass

If the value of the parameter act is set to "actpass", this may indicate that a device transmitting a message including the parameter act whose parameter value is set to "actpass" is an endpoint device which performs the keep-alive operation based on a setting of a counterpart device. The device performing the keep-alive operation based on the setting of the counterpart device may indicate that, if the counterpart device is an endpoint device which initiates the keep-alive operation, the device transmitting the message including the parameter act whose parameter value is set to "actpass" is an endpoint device which accepts the keep-alive operation. Alternatively, the device performing the keep-alive operation based on the setting of the counterpart device may indicate that, if the counterpart device is an endpoint device which accepts the keep-alive operation, the device transmitting the message including the parameter act whose parameter value is set to "actpass" is an endpoint device which initiates the keep-alive operation.

### (4) reject

If the value of the parameter act is set to "reject", this may indicate that a device transmitting a message including the parameter act whose parameter value is set to "reject" rejects the keep-alive operation of the counterpart device. In an embodiment, a case of rejecting the keep-alive operation of the counterpart device may include a case where the counterpart device does not want to perform the keep-alive operation itself, a case where the counterpart device does not want to initiate the keep-alive operation, and/or a case where a parameter value of the parameter keep proposed by the counterpart device is rejected.

In FIG. 6, for example, it will be assumed that the parameter value of the parameter act included in the registration message transmitted in operation 611 is set to "active". If the parameter value of the parameter act included in the registration message is set to "active", this may indicate that the electronic device 101 operates as an endpoint which initiates the keep-alive operation.

The server 600 may receive the registration message transmitted from the electronic device 101, identify that the received registration message is a registration message received from the electronic device 101 [based on the ID of the electronic device 101 included in the received registration message], identify the keep-alive frequency preferred by the electronic device 101 based on the parameter value of the parameter keep included in the received registration message, and identify that the electronic device 101 is the endpoint device which initiates the keep-alive operation based on the parameter value of the parameter act included in the received registration message.

In operation 613, the server 600 may transmit a 200 OK message to the electronic device 101 in response to the received registration message. In an embodiment, the 200 OK message may include Via header field parameters. In an embodiment, the Via header field parameters included in the 200 OK message may include keep and/or act. In an embodiment, the Via header field parameters included in the 200 OK message may further include an ID of a device (e.g., the electronic device 101) transmitting a registration message corresponding to the 200 OK message.

The server 600 may transmit the 200 OK message including the parameter keep whose parameter value is set, to indicate a willingness to receive a keep-alive message (e.g., a keep-alive request message) from an adjacent upstream SIP entity (e.g., the electronic device 101). In an embodiment, the parameter value of the parameter keep may be information related to a wake-up time point of the electronic device 101 which corresponds to the service (e.g., the first service and/or the second service). For example, the electronic device 101 may configure a timer for the service, and set a timer value of the timer to a value (e.g., an intersection value) determined based on a parameter value of the parameter keep included in the registration message and a parameter value of the parameter keep included in the 200 OK message received in response to the registration message. For example, the parameter value of the parameter keep included in the 200 OK message may indicate a keep-alive frequency preferred by the server 600. For example, the keep-alive frequency may be given in a second range unit or a minute range unit. In FIG. 6, for example, it will be assumed that the parameter value of the parameter keep included in the 200 OK message transmitted in operation 613 is set to a range of "600-700 seconds".

In FIG. 6, for example, it will be assumed that the parameter value of the parameter act included in the 200 OK message transmitted in operation 613 is set to "passive". If the parameter value of the parameter act included in the 200 OK message is set to "passive", this may indicate that the server 600 operates as an endpoint which accepts the keep-alive operation. As operation 613 is completed, the IMS registration procedure between the electronic device 101 and the server 600 may be completed.

As the IMS registration procedure between the electronic device 101 and the server 600 is completed, the electronic device 101 may identify an entity to initiate the keep-alive operation, and the electronic device 101 may set a timer value of the timer configured for the service. In FIG. 6, since the parameter value of the parameter act included in the 200 OK message is set to "passive", the electronic device 101 may identify that the electronic device 101 is an endpoint device which initiates the keep-alive operation and the server 600 is an endpoint device which accepts the keep-alive operation. In an embodiment, the electronic device 101 may determine the timer value of the timer based on the parameter value (e.g., a keep-alive frequency preferred by the electronic device 101) of the parameter keep included in the registration message, and the parameter value (e.g., a keep-alive frequency preferred by the server 600) of the parameter keep included in the 200 OK message. In an embodiment, the electronic device 101 may determine, as the timer value of the timer, any one value (e.g., an intersection value) within a range corresponding to an intersection of the parameter value of the parameter keep included in the registration message and the parameter value of the parameter keep included in the 200 OK message. The electronic device 101 may determine, as the timer value of the timer, the one value (e.g., the intersection value) within the range corresponding to the intersection of the parameter value of the parameter keep included in the registration message and the parameter value of the parameter keep included in the 200 OK message, based on various parameters, and there may be no separate limitation on the various parameters. In FIG. 6, since the parameter value of the parameter keep included in the registration message is in a range of 500-900 seconds and the parameter value of the parameter keep included in the 200 OK message is in a range of 600-700 seconds, it will be assumed that the electronic device 101 determines, as the timer value of the timer, 700 seconds among values in the range of 600-700 seconds corresponding to an intersection of the range of 500-900 seconds and the range of 600-700 seconds.

The electronic device 101 may set 700 seconds which is the determined intersection value to the timer value of the timer, and may start the timer. The timer value of the timer may indicate expiration time of the timer, and the expiration time may mean time from a time point at which time of the timer starts to a time point at which the timer expires. For example, if the expiration time of the timer is 700 seconds, the timer may expire after 700 seconds from the start time point of the timer. After starting the timer, the electronic device 101 may transition to a sleep state. The sleep state may mean at least one of a state in which at least a part of at least one function of the electronic device 101 is restricted compared to a normal state, or a state in which power consumption is lower than that in the normal state. Depending on implementation, the sleep state may be referred to as an "inactive state" or a "restricted state". In the sleep state, only a part of at least one function of the electronic device 101 may be restricted, or all of the at least one function may be stopped. Wake-up may mean that the electronic device 101 transitions from the sleep state to the normal state. If the electronic device 101 is required to perform another operation, the electronic device 101 may start the timer without transitioning to the sleep state.

Thereafter, in operation 615, the electronic device 101 may identify that the timer expires. When identifying that the timer expires, the electronic device 101 may wake up from the sleep state to transition to the normal state, and perform a set operation (e.g., operation 617 and operation 619). In operation 617, the electronic device 101 may transmit an STUN request message, which is the keep-alive request message, to the server 600. The server 600, which receives the STUN request message from the electronic device 101, may transmit an STUN response message, which is a keep-alive response message, to the electronic device 101 in response to the STUN request message in operation 619. The electronic device may receive the STUN response message from the server 600 and transition back to the sleep state.

As described in FIG. 6, negotiation on the parameter value of the parameter keep corresponding to the keep-alive frequency and the endpoint device performing the keep-alive operation may be performed between the electronic device 101 and the server 600, and a keep-alive operation based on a result of such negotiation may not only decrease resource (e.g., current) consumption of the electronic device 101, but may also enable a flexible keep-alive operation.

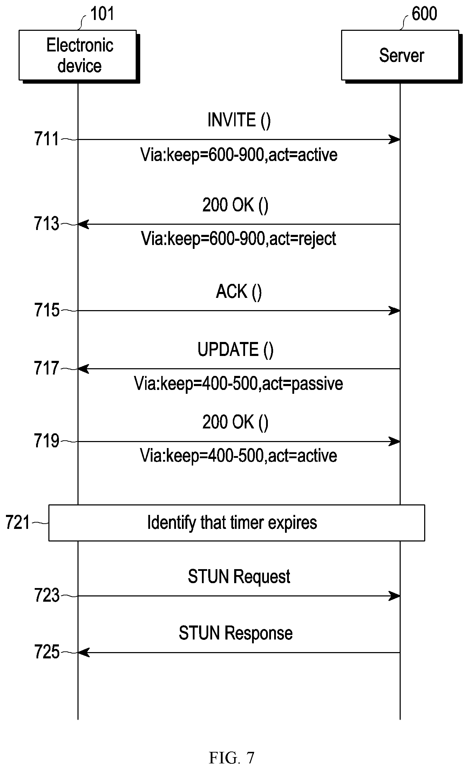

FIG. 7 is a signal flow diagram illustrating a process of managing wake-up time points in a wireless communication network, according to an embodiment.

Referring to FIG. 7, a wireless communication network may include an electronic device 101 (e.g., an electronic device 101 in FIG. 1A, 1B, 2, 3, or 6), and/or a server 600 (e.g., a server 108 in FIG. 1A, a first server 111a or a second server 112a in FIG. 1B, or a server 600 in FIG. 6). In an embodiment, the server 600 may provide a first service (e.g., a VoLTE service) and/or a second service (e.g., an RCS service). A process of managing wake-up time points illustrated in FIG. 7 may be a process of managing wake-up time points performed if the electronic device 101 is in a call state. In an embodiment, the call state may be a state in which a new dialog is generated while the electronic device 101 originates a call.

In operation 711, as the electronic device 101 originates a call, the electronic device 101 may transmit an invite message to the server 600. The invite message may be a SIP invite message and may include Via header field parameters. In an embodiment, the Via header field parameters included in the invite message may include keep and/or act. The parameter keep and the parameter act may be implemented to be similar to or substantially the same as a parameter keep and a parameter act described in FIG. 6, so a detailed description thereof will be omitted herein. In an embodiment, the Via header field parameters included in the invite message may further include an ID of a device (e.g., the electronic device 101) transmitting the invite message. In an embodiment, the ID of the device transmitting the invite message may include an IMSI and/or an IMPU of the device transmitting the invite message. It will be assumed that a parameter value of the parameter keep included in the invite message transmitted in operation 711 is set to a range of "600-900 seconds" and a parameter value of the parameter act is set to "active". If the parameter value of the parameter act included in the invite message is set to active, this may indicate that the electronic device 101 is an endpoint which initiates a keep-alive operation.

The server 600 may receive the invite message transmitted from the electronic device 101, identify that the received invite is an invite message received from the electronic device 101 based on the ID of the device of the device transmitting the invite message included in the received invite message, identify a keep-alive frequency preferred by the electronic device 101 based on the parameter value of the parameter keep included in the received invite message, and identify that the electronic device 101 is an endpoint device which initiates the keep-alive operation based on the parameter value of the parameter act included in the received invite message.

In operation 713, the server 600 may transmit a 200 OK message to the electronic device 101 in response to the received invite message. In an embodiment, the 200 OK message may include Via header field parameters. In an embodiment, the Via header field parameters included in the 200 OK message may include keep and/or act. In an embodiment, the Via header field parameters included in the 200 OK message may further include an ID of a device (e.g., the electronic device 101) transmitting an invite message corresponding to the 200 OK message. It will be assumed that a parameter value of the parameter keep included in the 200 OK message transmitted in operation 713 is set to a range of "600-900 seconds" and the parameter value of the parameter act is set to "reject". If the value of the parameter act included in the invite message is set to "reject", this may indicate that the server 600 rejects a keep-alive operation of the electronic device 101 which is a counterpart device. In an embodiment, a case where the server 600 rejects the keep-alive operation of the electronic device 101 may include a case where the electronic device 101 does not want to perform the keep-alive operation itself, a case where the electronic device 101 does not want to initiate the keep-alive operation, and/or a case where a parameter value of the parameter keep proposed by the electronic device 101 is rejected.

In operation 713, if it is impossible for the server 600 to accept the parameter value of the parameter keep included in the invite message received from the electronic device 101 based on various parameters such as a policy of the server 600, the parameter value of the parameter act may be set to "reject" to reject the parameter value of the parameter keep proposed by the electronic device 101.

The server 600 may set the parameter value of the parameter keep included in the 200 OK message to the parameter value of the parameter keep proposed by the electronic device 101, and may set the parameter value of the parameter act included in the 200 OK message to "reject". In FIG. 7, it will be assumed that the server 600 does not accept the parameter value of the parameter keep proposed by the electronic device 101 to enhance session monitoring in a call state rather than an idle state (for example, to set the parameter value of the parameter keep to a smaller value), and sets the value of the parameter act to "reject" to indicate this.

The electronic device 101, which receives the 200 OK message from the server 600, may transmit an acknowledge (ACK) message indicating that the 200 OK message has been normally received to the server 600 in operation 715.

The server 600, which receives the ACK message from the electronic device 101, may transmit an update message to the electronic device 101 to enhance the session monitoring in operation 717. In an embodiment, the update message may include Via header field parameters. In an embodiment, the Via header field parameters included in the update message may include keep and/or act. The Via header field parameters included in the update message may further include an ID of a device (e.g., the electronic device 101) which transmits the invite message corresponding to the 200 OK message. It will be assumed that a parameter value of a parameter keep included in the update message transmitted in operation 717 is set to a range of "400-500 seconds", and a parameter value of a parameter "act" is set to "passive". If the parameter value of the parameter act included in the update message is set to "passive", this may indicate that the server 600 operates as an endpoint which accepts the keep-alive operation.

The electronic device 101 may receive the update message from the server 600, and the electronic device 101, which receives the update message from the server 600, may transmit a 200 OK message in response to the update message in operation 719, and the 200 OK message may include Via header field parameters. In an embodiment, the Via header field parameters included in the 200 OK message transmitted in operation 719 may include keep and/or act. The Via header field parameters included in the 200 OK message transmitted in operation 719 may further include an ID of a device (e.g., the electronic device 101) which transmits the 200 OK message. The electronic device 101 may determine to accept the parameter value of the parameter keep included in the update message received from the server 600, and in this case, the parameter value of the parameter keep included in the 200 OK message may be set to a range of "400-500 seconds". In FIG. 7, it will be assumed that the parameter value of the parameter act included in the 200 OK message transmitted in operation 719 is set to "active". If the parameter value of the parameter act included in the 200 OK message is set to "active", this may indicate that the electronic device 101 is an endpoint which initiates the keep-alive operation.

The electronic device 101, which transmits the 200 OK message to the server 600, may identify an entity to initiate the keep-alive operation, and the electronic device 101 may set the timer value of the timer configured for a service (e.g., the first service and/or the second service). In FIG. 7, since the parameter value of the parameter act included in the update message is set to "passive" and the parameter value of the parameter act included in the 200 OK message is set to "active", the electronic device 101 may identify that the electronic device 101 is the endpoint device which initiates the keep-alive operation and the server 600 is the endpoint device which accepts the keep-alive operation. In an embodiment, since the electronic device 101 determines to accept the parameter value of the parameter keep (e.g., a keep-alive frequency preferred by the server 600) included in the update message, the electronic device 101 may determine the timer value of the timer based on the parameter value of the parameter keep included in the update message. In an embodiment, the electronic device 101 may determine, as the timer value of the timer, any one value (e.g., an intersection value) within a range corresponding to an intersection of the parameter value of the parameter keep included in the update message and the parameter value of the parameter keep included in the 200 OK message. In FIG. 7, since it is assumed that the electronic device 101 accepts the parameter value of the parameter keep proposed by the server 600, the parameter value of the parameter keep included in the update message and the parameter value of the parameter keep included in the 200 OK message may be the same.

The electronic device 101 may determine, as the timer value of the timer, any one value (e.g., the intersection value) within the range corresponding to the intersection of the parameter value of the parameter keep included in the update message and the parameter value of the parameter keep included in the 200 OK message based on various parameters, and there may be no separate limitation on the various parameters. In FIG. 7, since the parameter value of the parameter keep included in the update message and the parameter value of the parameter keep included in the 200 OK message are in a range of 400-500 seconds, it will be assumed that the electronic device 101 determines 400 seconds among values within the range of 400-500 seconds as the timer value of the timer.

The electronic device 101 may set 400 seconds, which is the determined intersection value, as the timer value of the timer, and may start the timer. The timer value of the timer may indicate expiration time of the timer, and the expiration time may mean time from a time point at which time of the timer starts to a time point at which the timer expires. For example, if the expiration time of the timer is 400 seconds, the timer may expire after 400 seconds from the start time point of the timer. After starting the timer, the electronic device 101 may transition to a sleep state. If the electronic device 101 is required to perform another operation, the electronic device 101 may start the timer without transitioning to the sleep state.

Thereafter, in operation 721, the electronic device 101 may identify that the timer expires. When identifying that the timer expires, the electronic device 101 may wake up from the sleep state to transition to the normal state, and perform a set operation (e.g., operation 723 and operation 725). In operation 723, the electronic device 101 may transmit an STUN request message, which is the keep-alive request message, to the server 600. The server 600, which receives the STUN request message from the electronic device 101, may transmit an STUN response message, which is a keep-alive response message, to the electronic device 101 in response to the STUN request message in operation 725. The electronic device may receive the STUN response message from the server 600 and transition back to the sleep state.

As described in FIG. 7, negotiation on the parameter value of the parameter keep corresponding to the keep-alive frequency and the endpoint device performing the keep-alive operation may be performed between the electronic device 101 and the server 600, and a keep-alive operation based on a result of such negotiation may not only increase a session monitoring performance of the server 600, but may also enable a flexible keep-alive operation.

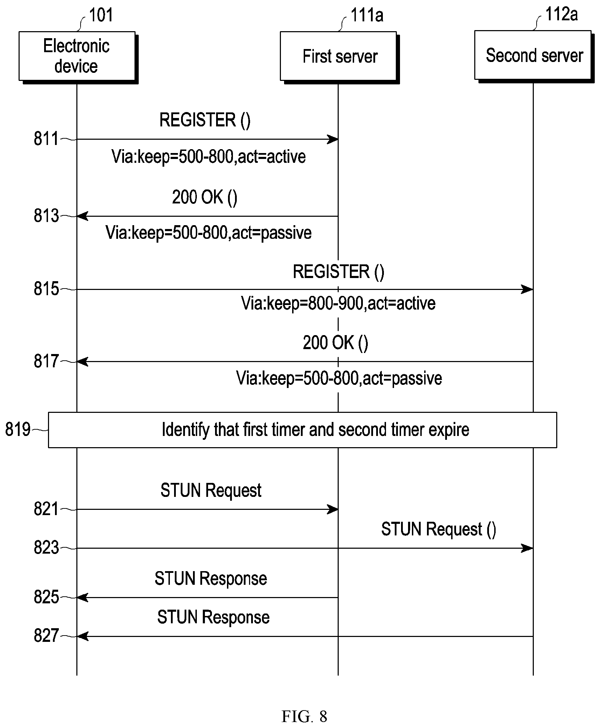

FIG. 8 is a signal flow diagram illustrating a process of managing wake-up time points in a wireless communication network, according to an embodiment.

Referring to FIG. 8, a wireless communication network may include an electronic device 101 (e.g., an electronic device 101 in FIG. 1A, 1B, 2, 3, 6, or 7), a first server 111a (e.g., a server 108 in FIG. 1A or a first server 111A in FIG. 1B), and a second server 112a (e.g., the server 108 in FIG. 1A or a second server 112A in FIG. 1B). For example, the first server 111a may be a server which provides a first service (e.g., a VoLTE service), and the second server 112a may be a server which provides a second service (e.g., an RCS service). The electronic device 101 may be a single SIM electronic device, and may perform a registration procedure with two servers (e.g., the first server 111a and the second server 112a), the first server 111a may be a first external electronic device which performs the first service with the electronic device 101, and the second server 112a may be a second external electronic device which performs the second service with the electronic device 101. Although FIG. 8 illustrates a case where the first server 111a which provides the first service and the second server 112a which provides the second service are separately implemented, the first server 111a and the second server 112a may be integrated into one server, and the integrated one server may provide the first service and the second service.

Although FIG. 8 will describe a process of managing wake-up time points assuming a case where the electronic device 101 is the single SIM electronic device and performs a registration procedure with two servers, the electronic device 101 may be a multi-SIM electronic device. If the electronic device 101 is the multi-SIM electronic device, the electronic device 101 may include a first SIM and a second SIM. In this case, the first server 111a may be a first external electronic device corresponding to the first SIM of the electronic device 101, and the second server 112a may be a second external electronic device corresponding to the second SIM of the electronic device 101. In an embodiment, the first SIM is a SIM subscribed to a communication carrier of the first server 111a and may correspond to the first service (e.g., the VoLTE service), and the second SIM is a SIM subscribed to a communication carrier of the second server 112a and may correspond to the second service (e.g., the RCS service).

In operation 811, as the electronic device 101 initiates an IMS registration procedure with the first server 111a, the electronic device 101 may transmit a registration message to the first server 111a. The registration message may be a SIP registration message, and may include Via header field parameters. In an embodiment, the Via header field parameters included in the registration message in operation 811 may include keep and/or act. The Via header field parameters included in the registration message in operation 811 may further include an ID of a device (e.g., the electronic device 101) transmitting the registration message. In an embodiment, the ID of the device transmitting the registration message in operation 811 may include an IMSI and/or an IP multimedia IMPU of the device transmitting the registration message. The parameter keep and the parameter act may be implemented to be similar to or substantially the same as a parameter keep and a parameter act described in FIG. 6, so a detailed description thereof will be omitted herein. It will be assumed that a parameter value of the parameter keep included in the registration message in operation 811 is set to a range of "500-800 seconds", and a parameter value of the parameter act is set to "active". If the parameter value of the parameter act included in the registration message in operation 811 is set to "active", this may indicate that the electronic device 101 is an endpoint which initiates a keep-alive operation.

The first server 111a may receive the registration message transmitted from the electronic device 101, identify that the received registration message is a registration message received from the electronic device 101 based on the ID of the electronic device 101 included in the received registration message, identify the keep-alive frequency preferred by the electronic device 101 based on the parameter value of the parameter keep included in the received registration message, and identify that the electronic device 101 is the endpoint device which initiates the keep-alive operation based on the parameter value of the parameter act included in the received registration message.

In operation 813, the first server 111a may transmit a 200 OK message to the electronic device 101 in response to the received registration message. In an embodiment, the 200 OK message may include Via header field parameters. In an embodiment, the Via header field parameters included in the 200 OK message may include keep and/or act. In an embodiment, the Via header field parameters included in the 200 OK message may further include an ID of a device (e.g., the electronic device 101) transmitting a registration message corresponding to the 200 OK message. It will be assumed that the parameter value of the parameter keep included in the 200 OK message transmitted in operation 813 is set to a range of "500-800 seconds", and the parameter value of the parameter act is set to "passive". If the parameter value of the parameter act included in the 200 OK message is set to "passive", this may indicate that the first server 111a operates as an endpoint which accepts the keep-alive operation. As operation 813 is completed, the IMS registration procedure between the electronic device 101 and the first server 111a may be completed.

In operation 815, as the electronic device 101 initiates an IMS registration procedure with the second server 112a, the electronic device 101 may transmit a registration message to the second server 112a. The registration message may be a SIP registration message, and may include Via header field parameters. In an embodiment, the Via header field parameters included in the registration message in operation 815 may include keep and/or act. In an embodiment, the Via header field parameters included in the registration message in operation 815 may further include an ID of a device (e.g., the electronic device 101) transmitting the registration message. The parameter keep and the parameter act may be implemented to be similar to or substantially the same as a parameter keep and a parameter act described in FIG. 6, so a detailed description thereof will be omitted herein. It will be assumed that a parameter value of the parameter keep included in the registration message in operation 815 is set to a range of "800-900 seconds", and a parameter value of the parameter act is set to "active". If the parameter value of the parameter act included in the registration message in operation 815 is set to "active", this may indicate that the electronic device 101 is an endpoint which initiates a keep-alive operation.

The second server 112a may receive the registration message transmitted from the electronic device 101, identify that the received registration message is a registration message received from the electronic device 101 based on the ID of the electronic device 101 included in the received registration message, identify the keep-alive frequency preferred by the electronic device 101 based on the parameter value of the parameter keep included in the received registration message, and identify that the electronic device 101 is the endpoint device which initiates the keep-alive operation based on the parameter value of the parameter act included in the received registration message.

In operation 817, the second server 112a may transmit a 200 OK message to the electronic device 101 in response to the received registration message. In an embodiment, the 200 OK message may include Via header field parameters. In an embodiment, the Via header field parameters included in the 200 OK message may include keep and/or act. The Via header field parameters included in the 200 OK message may further include an ID of a device (e.g., the electronic device 101) transmitting a registration message corresponding to the 200 OK message. It will be assumed that the parameter value of the parameter keep included in the 200 OK message transmitted in operation 817 is set to a range of "800-900 seconds", and the parameter value of the parameter act is set to "passive". If the parameter value of the parameter act included in the 200 OK message is set to "passive", this may indicate that the second server 112a operates as an endpoint which accepts the keep-alive operation. As operation 817 is completed, the IMS registration procedure between the electronic device 101 and the second server 112a may be completed.

As the IMS registration procedure between the electronic device 101 and the first server 111a is completed, the electronic device 101 may identify an entity to initiate the keep-alive operation, and the electronic device 101 may set a timer value of the first timer configured for the first service. In FIG. 8, since the parameter value of the parameter act included in the 200 OK message in operation 813 is set to "passive", the electronic device 101 may identify that the electronic device 101 is an endpoint device which initiates the keep-alive operation between the electronic device 101 and the first server 111a, and the first server 111a is an endpoint device which accepts the keep-alive operation.

As the IMS registration procedure between the electronic device 101 and the second server 112a is completed, the electronic device 101 may identify an entity to initiate the keep-alive operation, and the electronic device 101 may set a timer value of the second timer configured for the second service. In FIG. 8, since the parameter value of the parameter act included in the 200 OK message in operation 817 is set to "passive", the electronic device 101 may identify that the electronic device 101 is an endpoint device which initiates the keep-alive operation between the electronic device 101 and the second server 112a, and the second server 112a is an endpoint device which accepts the keep-alive operation.

In an embodiment, the electronic device 101 may determine the timer value of the first timer and the timer value of the second timer based on the parameter value (e.g., a keep-alive frequency preferred by the first server 111a) of the parameter keep included in the 200 OK message in operation 813, and the parameter value (e.g., a keep-alive frequency preferred by the second server 112a) of the parameter keep included in the 200 OK message in operation 817.

In an embodiment, the electronic device 101 may determine, as the timer value of the first timer and the timer value of the second timer, any one value (e.g., an intersection value) within a range corresponding to an intersection of the parameter value of the parameter keep included in the 200 OK message in operation 813 and the parameter value of the parameter keep included in the 200 OK message in operation 817. The electronic device 101 may determine, as the timer value of the first timer and the timer value of the second timer, the one value (e.g., the intersection value) within the range corresponding to the intersection of the parameter value of the parameter keep included in the 200 OK message in operation 813 and the parameter value of the parameter keep included in the 200 OK message in operation 817, based on various parameters, and there may be no separate limitation on the various parameters. In FIG. 8, since the parameter value of the parameter keep included in the 200 OK message in operation 813 is in a range of 500-800 seconds and the parameter value of the parameter keep included in the 200 OK message in operation 817 is in a range of 800-900 seconds, it will be assumed that the electronic device 101 determines, as the timer value of the first timer and the timer value of the second timer, 800 seconds corresponding to an intersection of the range of 500-800 seconds and the range of 800-900 seconds.

The electronic device 101 may set 800 seconds which is the determined intersection value to the timer value of the first timer and the timer value of the second timer, and may start the first timer and the second timer.

Thereafter, in operation 819, the electronic device 101 may identify that the first timer and the second timer expire.

When identifying that the first timer expires, the electronic device 101 may wake up from the sleep state to transition to the normal state, and perform a set operation (e.g., operation 821 and operation 825). In operation 821, the electronic device 101 may transmit an STUN request message, which is the keep-alive request message, to the first server 111a.

When identifying that the second timer expires, the electronic device 101 may wake up from the sleep state to transition to the normal state, and perform a set operation (e.g., operation 823 and operation 827). In an embodiment, since the electronic device 101 sets the timer value of the first timer and the timer value of the second timer to be the same, it may not be necessary to separately identify expiration of the second timer. In this case, an operation in which the electronic device 101 identifies the expiration of the second timer in operation 819 may be omitted. In operation 823, the electronic device 101 may transmit an STUN request message, which is the keep-alive request message, to the second server 112a.

The first server 111a, which receives the STUN request message from the electronic device 101, may transmit an STUN response message, which is a keep-alive response message, to the electronic device 101 in response to the STUN request message in operation 825. The electronic device may receive the STUN response message from the first server 111a and transition back to the sleep state.

The second server 112a, which receives the STUN request message from the electronic device 101, may transmit an STUN response message, which is a keep-alive response message, to the electronic device 101 in response to the STUN request message in operation 827. The electronic device may receive the STUN response message from the second server 112a and transition back to the sleep state.

As described in FIG. 8, if the electronic device 101 manages timers for a plurality of services based on an intersection value, instead of waking up from the sleep state for each of the plurality of services to perform the keep-alive operation, the electronic device 101 only needs to wake up once for the plurality of services to perform the keep-alive operation with servers for the plurality of services, so the number of times of waking up may be decreased. As the number of times of waking up is decreased, current consumption of the electronic device 101 may also be decreased.

Although FIG. 8 describes a case where operation 821 is performed prior to operation 823 and operation 825 is performed prior to operation 827, since the expiration time of the first timer and the expiration time of the second timer are set to be the same, operation 823 may be performed prior to operation 821 and operation 827 may be performed prior to operation 825.

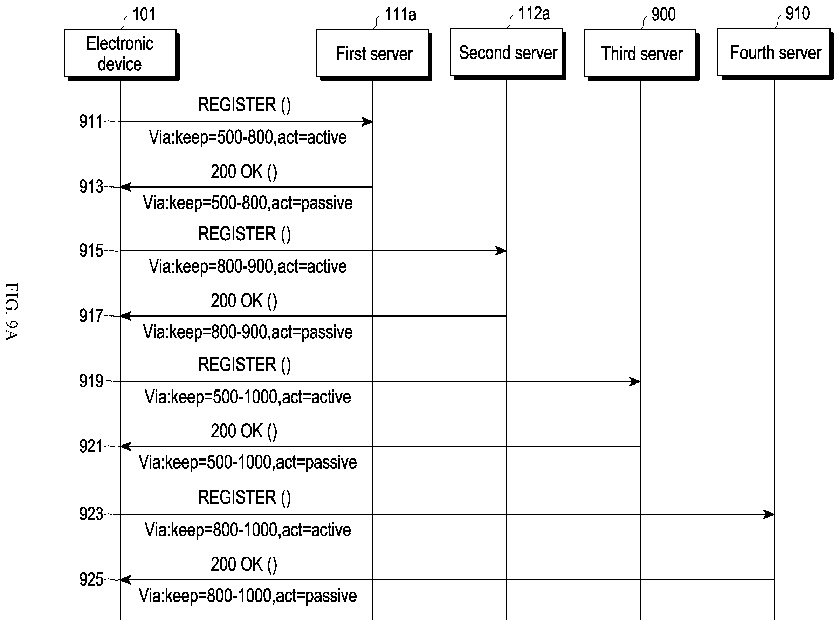

In FIG. 8, the first timer and the second timer may be synchronized by setting the timer value of the first timer configured for the first service and the timer value of the second timer configured for the second service to be the same, so a wake-up time point corresponding to the first service and a wake-up time point corresponding to the second service may be synchronized. By synchronizing the wake-up time point corresponding to the first service and the wake-up time point corresponding to the second service, the number of times that the electronic device 101 wakes up from the sleep state may be decreased, and the decrease in the number of times of waking up may enable achieving a decrease in current consumption. FIG. 9A is a signal flow diagram illustrating a process of managing wake-up time points in a wireless communication network, according to an embodiment.

FIG. 9B is a signal flow diagram illustrating a process of managing wake-up time points in a wireless communication network, according to an embodiment.

Referring to FIGS. 9A and 9B, a wireless communication network may include an electronic device 101 (e.g., an electronic device 101 in FIG. 1A, 1B, 2, 3, 6, 7, or 8), a first server 111a (e.g., a server 108 in FIG. 1A, a first server 111A in FIG. 1B, or a first server 111A in FIG. 8), a second server 112a (e.g., the server 108 in FIG. 1A, a second server 112A in FIG. 1B, or a second server 112A in FIG. 8), a third server 900 (e.g., the server 108 in FIG. 1A), and a fourth server 910 (e.g., the server 108 in FIG. 1A). For example, the first server 111a may be a server which provides a first service (e.g., a first VoLTE service), the second server 112a may be a server which provides a second service (e.g., a first RCS service), the third server 900 may be a server which provides a third service (e.g., a second VoLTE service), and the fourth server 910 may be a server which provides a fourth service (e.g., a second RCS service). The electronic device 101 may be a multi-SIM electronic device, and may include a first SIM and a second SIM. The first server 111a may be a first external electronic device which corresponds to the first SIM of the electronic device 101, the second server 112a may be a second external electronic device which corresponds to the first SIM of the electronic device 101, the third server 900 may be a third external electronic device which corresponds to the second SIM of the electronic device 101, and the fourth server 910 may be a fourth external electronic device which corresponds to the second SIM of the electronic device 101. In an embodiment, the first SIM is a SIM subscribed to a communication carrier of the first server 111a and a communication carrier of the second server 112a and may correspond to the first service and the second service, and the second SIM is a SIM subscribed to a communication carrier of the third server 900 and a communication carrier of the fourth server 910 and may correspond to the third service and the fourth service. Although FIGS. 9A and 9B illustrate a case where the first server 111a which provides the first service and the second server 112a which provides the second service are separately implemented, the first server 111a and the second server 112a may be integrated into one server, and the integrated one server may provide the first service and the second service. Although FIGS. 9A and 9B illustrate a case where the third server 900 which provides the third service and the fourth server 910 which provides the fourth service are separately implemented, the third server 900 and the fourth server 910 may be integrated into one server, and the integrated one server may provide the third service and the fourth service.

Operations 911 to 917 may be implemented to be similar to or substantially the same as operations 811 to 817 in FIG. 8, so a detailed description thereof will be omitted herein.

In operation 919, as the electronic device 101 initiates an IMS registration procedure with the third server 900, the electronic device 101 may transmit a registration message to the third server 900. The registration message may be a SIP registration message, and may include Via header field parameters. In an embodiment, the Via header field parameters included in the registration message in operation 919 may include keep and/or act. In an embodiment, the Via header field parameters included in the registration message in operation 919 may further include an ID of a device (e.g., the electronic device 101) transmitting the registration message. In an embodiment, the ID of the device transmitting the registration message may include an IMSI and/or an IMPU of the device transmitting the registration message. The parameter keep and the parameter act may be implemented to be similar to or substantially the same as a parameter keep and a parameter act described in FIG. 6, so a detailed description thereof will be omitted herein. It will be assumed that a parameter value of the parameter keep included in the registration message in operation 919 is set to a range of "500-1000 seconds", and a parameter value of the parameter act is set to "active". If the parameter value of the parameter act included in the registration message in operation 919 is set to "active", this may indicate that the electronic device 101 is an endpoint which initiates a keep-alive operation.

The third server 900 may receive the registration message transmitted from the electronic device 101, identify that the received registration message is a registration message received from the electronic device 101 based on the ID of the electronic device 101 included in the received registration message, identify the keep-alive frequency preferred by the electronic device 101 based on the parameter value of the parameter keep included in the received registration message, and identify that the electronic device 101 is the endpoint device which initiates the keep-alive operation based on the parameter value of the parameter act included in the received registration message.

In operation 921, the third server 900 may transmit a 200 OK message to the electronic device 101 in response to the received registration message. In an embodiment, the 200 OK message may include Via header field parameters. In an embodiment, the Via header field parameters included in the 200 OK message may include keep and/or act. The Via header field parameters included in the 200 OK message may further include an ID of a device (e.g., the electronic device 101) transmitting a registration message corresponding to the 200 OK message. It will be assumed that the parameter value of the parameter keep included in the 200 OK message transmitted in operation 921 is set to a range of "500-1000 seconds", and the parameter value of the parameter act is set to "passive". If the parameter value of the parameter act included in the 200 OK message is set to "passive", this may indicate that the third server 900 operates as an endpoint which accepts the keep-alive operation. As operation 921 is completed, the IMS registration procedure between the electronic device 101 and the third server 900 may be completed.

In operation 923, as the electronic device 101 initiates an IMS registration procedure with the fourth server 910, the electronic device 101 may transmit a registration message to the fourth server 910. The registration message may be a SIP registration message, and may include Via header field parameters. In an embodiment, the Via header field parameters included in the registration message in operation 923 may include keep and/or act. In an embodiment, the Via header field parameters included in the registration message in operation 923 may further include an ID of a device (e.g., the electronic device 101) transmitting the registration message. The parameter keep and the parameter act may be implemented to be similar to or substantially the same as a parameter keep and a parameter act described in FIG. 6, so a detailed description thereof will be omitted herein. It will be assumed that a parameter value of the parameter keep included in the registration message in operation 923 is set to a range of "800-1000 seconds", and a parameter value of the parameter act is set to "active". If the parameter value of the parameter act included in the registration message in operation 923 is set to "active", this may indicate that the electronic device 101 is an endpoint which initiates a keep-alive operation.

The fourth server 910 may receive the registration message transmitted from the electronic device 101, identify that the received registration message is a registration message received from the electronic device 101 based on the ID of the electronic device 101 included in the received registration message, identify the keep-alive frequency preferred by the electronic device 101 based on the parameter value of the parameter keep included in the received registration message, and identify that the electronic device 101 is the endpoint device which initiates the keep-alive operation based on the parameter value of the parameter act included in the received registration message.

In operation 925, the fourth server 910 may transmit a 200 OK message to the electronic device 101 in response to the received registration message. In an embodiment, the 200 OK message may include Via header field parameters. In an embodiment, the Via header field parameters included in the 200 OK message may include keep and/or act. In an embodiment, the Via header field parameters included in the 200 OK message may further include an ID of a device (e.g., the electronic device 101) transmitting a registration message corresponding to the 200 OK message. It will be assumed that the parameter value of the parameter keep included in the 200 OK message transmitted in operation 925 is set to a range of "800-1000 seconds", and the parameter value of the parameter act is set to "passive". If the parameter value of the parameter act included in the 200 OK message is set to "passive", this may indicate that the fourth server 910 operates as an endpoint which accepts the keep-alive operation. As operation 925 is completed, the IMS registration procedure between the electronic device 101 and the fourth server 910 may be completed.

As the IMS registration procedure between the electronic device 101 and the first server 111a is completed, the electronic device 101 may identify an entity to initiate the keep-alive operation, and the electronic device 101 may set a timer value of the first timer configured for the first service. In FIGS. 9A and 9B, since the parameter value of the parameter act included in the 200 OK message in operation 913 is set to "passive", the electronic device 101 may identify that the electronic device 101 is an endpoint device which initiates the keep-alive operation between the electronic device 101 and the first server 111a, and the first server 111a is an endpoint device which accepts the keep-alive operation.

As the IMS registration procedure between the electronic device 101 and the second server 112a is completed, the electronic device 101 may identify an entity to initiate the keep-alive operation, and the electronic device 101 may set a timer value of the second timer configured for the second service. In FIGS. 9A and 9B, since the parameter value of the parameter act included in the 200 OK message in operation 917 is set to "passive", the electronic device 101 may identify that the electronic device 101 is an endpoint device which initiates the keep-alive operation between the electronic device 101 and the second server 112a, and the second server 112a is an endpoint device which accepts the keep-alive operation.

As the IMS registration procedure between the electronic device 101 and the third server 900 is completed, the electronic device 101 may identify an entity to initiate the keep-alive operation, and the electronic device 101 may set a timer value of the third timer configured for the third service. In FIGS. 9A and 9B, since the parameter value of the parameter act included in the 200 OK message in operation 921 is set to "passive", the electronic device 101 may identify that the electronic device 101 is an endpoint device which initiates the keep-alive operation between the electronic device 101 and the third server 900, and the third server 900 is an endpoint device which accepts the keep-alive operation.

As the IMS registration procedure between the electronic device 101 and the fourth server 910 is completed, the electronic device 101 may identify an entity to initiate the keep-alive operation, and the electronic device 101 may set a timer value of the fourth timer configured for the fourth service. In FIGS. 9A and 9B, since the parameter value of the parameter act included in the 200 OK message in operation 925 is set to "passive", the electronic device 101 may identify that the electronic device 101 is an endpoint device which initiates the keep-alive operation between the electronic device 101 and the fourth server 910, and the fourth server 910 is an endpoint device which accepts the keep-alive operation.

In an embodiment, the electronic device 101 may determine the timer value of the first timer, the timer value of the second timer, the timer value of the third timer, and the timer value of the fourth timer based on the parameter value (e.g., a keep-alive frequency preferred by the first server 111a) of the parameter keep included in the 200 OK message in operation 913, the parameter value (e.g., a keep-alive frequency preferred by the second server 112a) of the parameter keep included in the 200 OK message in operation 917, the parameter value (e.g., a keep-alive frequency preferred by the third server 900) of the parameter keep included in the 200 OK message in operation 921, and the parameter value (e.g., a keep-alive frequency preferred by the fourth server 910) of the parameter keep included in the 200 OK message in operation 925.

In an embodiment, the electronic device 101 may determine, as the timer value of the first timer, the timer value of the second timer, the timer value of the third timer, and the timer value of the fourth timer, any one value (e.g., an intersection value) within a range corresponding to an intersection of the parameter value of the parameter keep included in the 200 OK message in operation 913, the parameter value of the parameter keep included in the 200 OK message in operation 917, the parameter value of the parameter keep included in the 200 OK message in operation 921, and the parameter value of the parameter keep included in the 200 OK message in operation 925. The electronic device 101 may determine, as the timer value of the first timer, the timer value of the second timer, the timer value of the third timer, and the timer value of the fourth timer, the one value (e.g., the intersection value) within the range corresponding to the intersection of the parameter value of the parameter keep included in the 200 OK message in operation 913, the parameter value of the parameter keep included in the 200 OK message in operation 917, the parameter value of the parameter keep included in the 200 OK message in operation 921, and the parameter value of the parameter keep included in the 200 OK message in operation 925, based on various parameters, and there may be no separate limitation on the various parameters. In FIGS. 9A and 9B, since the parameter value of the parameter keep included in the 200 OK message in operation 913 is in a range of 500-800 seconds, the parameter value of the parameter keep included in the 200 OK message in operation 917 is in a range of 800-900 seconds, the parameter value of the parameter keep included in the 200 OK message in operation 921 is in a range of 500-1000 seconds, and the parameter value of the parameter keep included in the 200 OK message in operation 925 is in a range of 800-1000 seconds, it will be assumed that the electronic device 101 determines, as the timer value of the first timer, the timer value of the second timer, the timer value of the third timer, and the timer value of the fourth timer, 800 seconds corresponding to an intersection of the range of 500-800 seconds, the range of 800-900 seconds, the range of 500-1000 seconds, and the range of 800-1000 seconds.

The electronic device 101 may set 800 seconds which is the determined intersection value to the timer value of the first timer, the timer value of the second timer, the timer value of the third timer, and the timer value of the fourth timer, and may start the first timer, the second timer, the third timer, and the fourth timer.

Thereafter, in operation 927, the electronic device 101 may identify that the first timer, the second timer, the third timer, and the fourth timer expire.

When identifying that the first timer expires, the electronic device 101 may wake up from the sleep state to transition to the normal state, and perform a set operation (e.g., operation 929 and operation 927). In operation 929, the electronic device 101 may transmit an STUN request message, which is the keep-alive request message, to the first server 111a.

When identifying that the second timer expires, the electronic device 101 may wake up from the sleep state to transition to the normal state, and perform a set operation (e.g., operation 931 and operation 939). In an embodiment, since the electronic device 101 sets the timer value of the first timer and the timer value of the second timer to be the same, it may not be necessary to separately identify expiration of the second timer. In this case, an operation in which the electronic device 101 identifies the expiration of the second timer in operation 927 may be omitted. In operation 931, the electronic device 101 may transmit an STUN request message to the second server 112a.

When identifying that the third timer expires, the electronic device 101 may wake up from the sleep state to transition to the normal state, and perform a set operation (e.g., operation 933 and operation 941). In an embodiment, since the electronic device 101 sets the timer value of each of the first timer and the second timer and the timer value of the third timer to be the same, it may not be necessary to separately identify expiration of the third timer. In this case, an operation in which the electronic device 101 identifies the expiration of the third timer in operation 927 may be omitted. In operation 933, the electronic device 101 may transmit an STUN request message to the third server 900.

When identifying that the fourth timer expires, the electronic device 101 may wake up from the sleep state to transition to the normal state, and perform a set operation (e.g., operation 935 and operation 943). In an embodiment, since the electronic device 101 sets the timer value of each of the first timer to the third timer and the timer value of the fourth timer to be the same, it may not be necessary to separately identify expiration of the fourth timer. In this case, an operation in which the electronic device 101 identifies the expiration of the fourth timer in operation 927 may be omitted. In operation 935, the electronic device 101 may transmit an STUN request message to the fourth server 910.

The first server 111a, which receives the STUN request message from the electronic device 101, may transmit an STUN response message, which is a keep-alive response message, to the electronic device 101 in response to the STUN request message in operation 937. The electronic device may receive the STUN response message from the first server 111a and transition back to the sleep state.

The second server 112a, which receives the STUN request message from the electronic device 101, may transmit an STUN response message to the electronic device 101 in response to the STUN request message in operation 939. The electronic device may receive the STUN response message from the second server 112a and transition back to the sleep state.

The third server 900, which receives the STUN request message from the electronic device 101, may transmit an STUN response message to the electronic device 101 in response to the STUN request message in operation 941. The electronic device may receive the STUN response message from the third server 900 and transition back to the sleep state.

The fourth server 910, which receives the STUN request message from the electronic device 101, may transmit an STUN response message to the electronic device 101 in response to the STUN request message in operation 943. The electronic device may receive the STUN response message from the fourth server 910 and transition back to the sleep state.

As described in FIGS. 9A and 9B, if the electronic device 101 manages timers for a plurality of services based on an intersection value, instead of waking up from the sleep state for each of the plurality of services to perform the keep-alive operation, the electronic device 101 only needs to wake up once for the plurality of services to perform the keep-alive operation with servers for the plurality of services, so the number of times of waking up may be decreased. As the number of times of waking up is decreased, current consumption of the electronic device 101 may also be decreased.

Although FIGS. 9A and 9B describe a case where operations 929 to 935 are sequentially performed, since the expiration times of the first timer to the fourth timer are set to be the same, an order of operations 929 to 935 may be changed.

In FIGS. 9A and 9B, the first timer to the fourth timer may be synchronized by setting the timer value of the first timer and the second timer configured for the first service and the second service and the timer value of the third timer and the fourth timer configured for the third service and the fourth service to be the same, so a wake-up time point corresponding to the first service, a wake-up time point corresponding to the second service, a wake-up time point corresponding to the third service, and a wake-up time point corresponding to the fourth service may be synchronized. By synchronizing the wake-up time point corresponding to the first service, the wake-up time point corresponding to the second service, the wake-up time point corresponding to the third service, and the wake-up time point corresponding to the fourth service, the number of times that the electronic device 101 wakes up from the sleep state may be decreased, and the decrease in the number of times of waking up may enable achieving a decrease in current consumption.

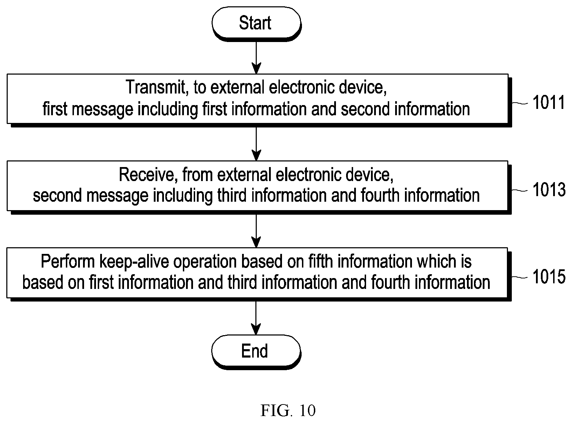

FIG. 10 is a flowchart illustrating an operating process of an electronic device, according to an embodiment.

Referring to FIG. 10, an electronic device (e.g., an electronic device 101 in FIG. 1A, 1B, 2, 3, or 6) (e.g., a processor 120 in FIG. 1A or 3, or a communication processor 310 in FIG. 3) may, in operation 1011, transmit, to an external electronic device (e.g., a server 108 in FIG. 1A, or a server 600 in FIG. 6 or 7), a first message including first information related to a first wake-up period preferred by the electronic device corresponding to a communication service (e.g., a first communication service and/or a second communication service) and second information related to a device performing a keep-alive operation. For example, the communication service may include an IMS-based communication service, the first communication service may include a VoLTE service, and the second communication service may include an RCS service. In an embodiment, as initiating an IMS registration procedure with the server, the electronic device may transmit the first message to the server. In this case, the first message may be a registration message. The registration message may be a SIP registration message. In an embodiment, as originating a call, the electronic device may transmit the first message to the server. In this case, the first message may be an invite message.

In an embodiment, the first information may include a range used for setting a first wake period. For example, the first information may be a parameter value of a parameter keep included in the registration message or the invite message. In an embodiment, the parameter value of the parameter keep may indicate a keep-alive frequency, and may be set to a value in a range unit. The parameter keep may be included in a Via header field parameter included in the registration message or the invite message, and the parameter keep and the parameter value of the parameter keep have been described with reference to FIGS. 6 to 9A and 9B, so a detailed description thereof will be omitted herein.

In an embodiment, the second information may indicate information related to the device performing the keep-alive operation (e.g., an endpoint device performing the keep-alive operation). For example, the second information may be a parameter value of a parameter act included in the registration message or the invite message. The parameter act and the parameter value of the parameter act have been described above with reference to FIGS. 6 to 9A and 9B, so a detailed description thereof will be omitted herein.

The electronic device, which transmits the first message, may, in operation 1013, receive, from the external electronic device in response to the first message, a second message including third information related to a second wake-up period preferred by the external electronic device corresponding to the communication service and fourth information related to a device performing the keep-alive operation. In an embodiment, the second message may be a 200 OK message which is a response message to the registration message or a 200 OK message which is a response message to the invite message.

In an embodiment, the third information may be a second range used for setting the second wake-up period corresponding to the communication service. For example, the third information may be a parameter value of a parameter keep included in the 200 OK message for the registration message or the 200 OK message for the invite message. The parameter keep may be included in a Via header field parameter included in the 200 OK message for the registration message or the 200 OK message for the invite message.

In an embodiment, the fourth information may indicate information related to the device performing the keep-alive operation (e.g., an endpoint device performing the keep-alive operation). In an embodiment, the fourth information may be associated with the second information. For example, the fourth information may be a parameter value of a parameter act included in the 200 OK message.

The electronic device, which receives the second message, may, in operation 415, perform the keep-alive operation based on fifth information associated with the first information and the third information, and the fourth information. In an embodiment, the electronic device may identify whether to perform a set operation based on the parameter act included in the second message, this has been described above with reference to FIGS. 6 to 9A and 9B, so a detailed description thereof will be omitted herein.

In an embodiment, the electronic device may determine, based on the first information and the third information, the fifth information related to a wake-up period corresponding to the communication service. In an embodiment, since the first information includes a first range used for setting the first wake-up period corresponding to the communication service and the third information includes a second range used for setting the second wake-up period, the electronic device may determine the fifth information based on the first range and the second range. In an embodiment, since the first information is the first range used for setting the first wake-up period corresponding to the communication service and the third information is the second range used for setting the second wake-up period, the electronic device may determine a value within a range which is an intersection of the first range and the second range as the fifth information.

The electronic device, which determines the fifth information, may perform the keep-alive operation based on the fifth information. In an embodiment, the electronic device may perform the keep-alive operation based on the wake-up period corresponding to the fifth information.

In an embodiment, if the fourth information indicates that the external electronic device is a device which accepts initiation of the keep-alive operation by the electronic device, the electronic device may transmit a keep-alive request message to the external electronic device, and receive a keep-alive response message from the external electronic device in response to the keep-alive request message.

In an embodiment, if the fourth information indicates that the external electronic device is a device which initiates the keep-alive operation, the electronic device may receive a keep-alive request message from the external electronic device, and transmit a keep-alive response message to the external electronic device in response to the keep-alive request message.

In an embodiment, if the fourth information indicates that the external electronic device is a device which performs the keep-alive operation based on a setting of a counterpart device and the second information indicates that the electronic device is a device which initiates the keep-alive operation, the electronic device may transmit a keep-alive request message to the external electronic device, and receive a keep-alive response message from the external electronic device in response to the keep-alive request message.

In an embodiment, if the fourth information indicates that the external electronic device is a device which performs the keep-alive operation based on a setting of a counterpart device and the second information indicates that the electronic device is a device which accepts the keep-alive operation, the electronic device may receive a keep-alive request message from the external electronic device, and transmit a keep-alive response message to the external electronic device in response to the keep-alive request message.

In an embodiment, the electronic device may identify, based on the fourth information, not to perform the keep-alive operation. In this case, the electronic device may receive, from the external electronic device, a third message including sixth information related to a third wake-up period preferred by the external electronic device corresponding to the communication service and seventh information related to a device which performs the keep-alive operation. In an embodiment, the third message may be an update message.

In an embodiment, the sixth information may be a third range used for setting the third wake-up period corresponding to the communication service. For example, the sixth information may be a parameter value of a parameter keep included in the update message. The parameter keep may be included in a Via header field parameter included in the update message.

In an embodiment, the seventh information may indicate information related to the device which performs the keep-alive operation (e.g., an endpoint device which performs the keep-alive operation). For example, the seventh information may be a parameter value of a parameter act included in the update message.

The electronic device, which receives the third message from the external electronic device, may transmit, to the external electronic device, the fourth message including the sixth information and eighth information related to a device which performs the keep-alive operation. In an embodiment, the fourth message may be a 200 OK message which is a response message to the update message. In an embodiment, the eighth information may indicate information related to the device which performs the keep-alive operation (e.g., the endpoint device which performs the keep-alive operation). For example, the eighth information may be a parameter value of a parameter act included in the 200 OK message.

The electronic device, which transmits the fourth message to the external electronic device, may perform the keep-alive operation based on the sixth information. In an embodiment, the electronic device may perform the keep-alive operation based on a wake-up period corresponding to the sixth information.

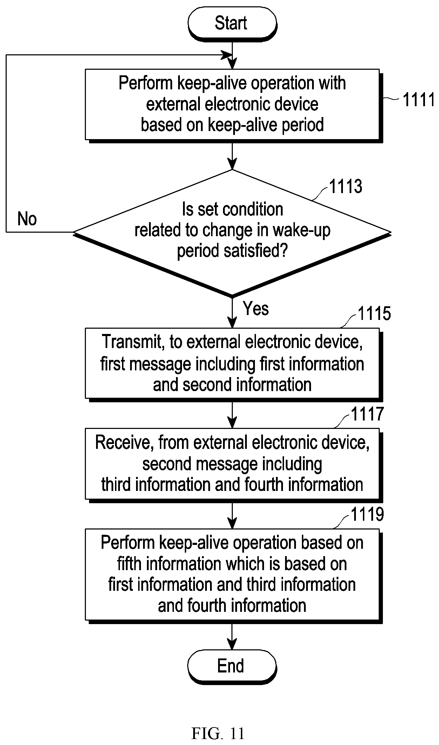

FIG. 11 is a flowchart illustrating an operating process of an electronic device, according to an embodiment.

Referring to FIG. 11, an electronic device (e.g., an electronic device 101 in FIG. 1A, 1B, 2, 3, or 6) (e.g., a processor 120 in FIG. 1A or 3, or a communication processor 310 in FIG. 3) performs, in operation 1111, a keep-alive operation with an external electronic device (e.g., a server 108 in FIG. 1A, or a server 600 in FIG. 6 or 7) based on a wake-up period corresponding to a communication service (e.g., a first communication service and/or a second communication service).

As such, while performing the keep-alive operation with the external electronic device, the electronic device may identify, in operation 1113, whether a set condition related to a change in the wake-up period is satisfied. In an embodiment, the set condition related to the change in the wake-up period may include a condition for changing the wake-up period for the keep-alive operation currently being performed by the electronic device with the external electronic device. In an embodiment, the set condition related to the change in the wake-up period may include at least one of a condition that a remaining battery level is less than a threshold battery level, a condition that reception strength is less than threshold reception strength, a condition that a detected temperature is higher than or equal to a threshold temperature, a condition that the electronic device is in a roaming state, or a condition that the electronic device operates in a power saving mode.

In an embodiment, that the electronic device is in the roaming state may mean that a home public land mobile network (HPLMN) of the electronic device does not exist. In an embodiment, that the electronic device is in the roaming state may include a case where a mobile country code (MCC) value of an HPLMN of a SIM recognized by the electronic device is different from an MCC value obtained according to a scan operation in an area where the electronic device is currently located. In an embodiment, that the electronic device is in the roaming state may include a case where the electronic device is camped on a cell of a visited public land mobile network (VPLMN) (hereinafter, referred to as a "VPLMN cell") rather than a cell of the HPLMN (hereinafter, referred to as an "HPLMN cell"). In an embodiment, the HPLMN may be related to a first communication carrier, and the VPLMN may be related to a second communication carrier. In an embodiment, that the electronic device is in the roaming state may include a case where the electronic device, which targets a set country or a set carrier, is camped on a cell of a cellular network of a country other than the set country.

In an embodiment, the power saving mode may refer to a mode capable of saving battery consumption by limiting at least one specific function of the electronic device. In an embodiment, the power saving mode may be set according to a setting of a user of the electronic device regardless of a remaining battery level.

If the set condition related to the change in the wake-up period is not satisfied in operation 1113 (Operation 1113-NO), the electronic device may return to operation 1111.

If the set condition related to the change in the wake-up period is satisfied in operation 1113 (Operation 1113-YES), the electronic device may perform operations 1115 to 1119. Operations 1115 to 1119 may be implemented to be similar to or substantially the same as operations 1011 to 1015 in FIG. 10, so a detailed description thereof will be omitted herein. However, in FIG. 11, since the electronic device has already been performing the keep-alive operation with the external electronic device at the wake-up period corresponding to the communication service in operation 1111, the wake-up period corresponding to fifth information identified in operation 1119 may be a changed wake-up period which is different from the wake-up period used in operation 1111. Unlike an operation of the electronic device described in FIG. 10, the operation of the electronic device described in FIG. 11 may be an operation of changing the wake-up period to perform the keep-alive operation with the external electronic device if the set condition is satisfied while already performing the keep-alive operation with the external electronic device based on the wake-up period.

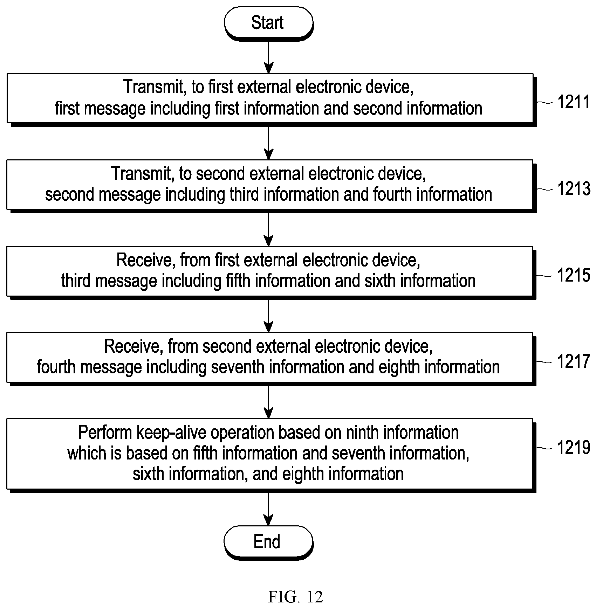

FIG. 12 is a flowchart illustrating an operating process of an electronic device, according to an embodiment.

Referring to FIG. 12, an electronic device (e.g., an electronic device 101 in FIG. 1A, 1B, 2, 3, or 6) (e.g., a processor 120 in FIG. 1A or 3, or a communication processor 310 in FIG. 3) may, in operation 1211, transmit, to a first external electronic device (e.g., a first server 111a in FIG. 1B), a first message including first information related to a first wake-up period preferred by the electronic device corresponding to a first communication service and second information related to a device performing a keep-alive operation. For example, the first communication service may be a VoLTE service. In an embodiment, as initiating an IMS registration procedure with the first server, the electronic device may transmit the first message to the first server. In this case, the first message may be a registration message. The registration message may be a SIP registration message. In an embodiment, as originating a call, the electronic device may transmit the first message to the first server. In this case, the first message may be an invite message.

In an embodiment, the first information may be a range used for setting a first wake period corresponding to the first communication service. For example, the first information may be a parameter value of a parameter keep included in the registration message or the invite message. The parameter keep may be included in a Via header field parameter included in the registration message or the invite message, and the parameter keep and the parameter value of the parameter keep have been described above with reference to FIGS. 6 to 9A and 9B, so a detailed description thereof will be omitted herein.

In an embodiment, the second information may indicate information related to the device performing the keep-alive operation (e.g., an endpoint device performing the keep-alive operation). For example, the second information may be a parameter value of a parameter act included in the registration message or the invite message. The parameter act and the parameter value of the parameter act have been described above with reference to FIGS. 6 to 9A and 9B, so a detailed description thereof will be omitted herein.

The electronic device, which transmits the first message, may, in operation 1213, transmit, to a second external electronic device (e.g., a second server 112a in FIG. 1B), a second message including third information related to a second wake-up period preferred by the electronic device corresponding to a second communication service and fourth information related to a device performing the keep-alive operation. For example, the second communication service may be an RCS service. In an embodiment, as initiating an IMS registration procedure with the second server, the electronic device may transmit the second message to the second server. In this case, the second message may be a registration message. The registration message may be a SIP registration message. In an embodiment, as originating a call, the electronic device may transmit the second message to the second server. In this case, the second message may be an invite message.

In an embodiment, the third information may be a range used for setting the second wake-up period corresponding to the second communication service. For example, the first information may be a parameter value of a parameter keep included in the registration message or the invite message. The parameter keep may be included in a Via header field parameter included in the registration message or the invite message.

In an embodiment, the fourth information may indicate information related to the device performing the keep-alive operation (e.g., an endpoint device performing the keep-alive operation). For example, the fourth information may be a parameter value of a parameter act included in the registration message or the invite message.

The electronic device, which transmits the second message, may, in operation 1215, receive, from the first external electronic device in response to the first message, a third message including fifth information related to a third wake-up period preferred by the first external electronic device corresponding to the first communication service and sixth information related to a device performing the keep-alive operation. In an embodiment, the third message may be a 200 OK message which is a response message to the registration message or a 200 OK message which is a response message to the invite message.

In an embodiment, the fifth information may be a range used for setting the third wake-up period corresponding to the first communication service. For example, the fifth information may be a parameter value of a parameter keep included in the 200 OK message for the registration message or the 200 OK message for the invite message. The parameter keep may be included in a Via header field parameter included in the 200 OK message for the registration message or the 200 OK message for the invite message.

In an embodiment, the sixth information may indicate information related to the device performing the keep-alive operation (e.g., an endpoint device performing the keep-alive operation). For example, the sixth information may be a parameter value of a parameter act included in the 200 OK message.

In operation 1217, the electronic device, which receives the third message, may receive, from the second external electronic device in response to the second message, a fourth message including seventh information related to a fourth wake-up period preferred by the second external electronic device and corresponding to the second communication service, and eighth information related to a device performing the keep-alive operation. In an embodiment, the fourth message may be a 200 OK message, which is a response message to the registration message, or a 200 OK message, which is a response message to the invite message.

In an embodiment, the seventh information may be a range used for setting the fourth wake-up period corresponding to the second communication service. For example, the seventh information may be a parameter value of a parameter keep included in the 200 OK message for the registration message or the 200 OK message for the invite message. The parameter keep may be included in a Via header field parameter included in the 200 OK message for the registration message or the 200 OK message for the invite message.

In an embodiment, the eighth information may indicate information related to a device performing the keep-alive operation (e.g., an endpoint device performing the keep-alive operation). For example, the eighth information may be a parameter value of a parameter act included in the 200 OK message.

The electronic device, which receives the fourth message, may, in operation 1219, perform the keep-alive operation based on ninth information associated with the fifth information and the seventh information, the sixth information, and the eighth information. In an embodiment, the electronic device may identify whether to perform a set operation based on the parameter act included in the third message and the fourth message, this has been described above with reference to FIGS. 6 to 9A and 9B, so a detailed description thereof will be omitted herein.

In an embodiment, the electronic device may determine, based on the fifth information and the seventh information, the ninth information related to a wake-up period corresponding to the first communication service and the second communication service. In an embodiment, since the fifth information includes a first range used for setting the third wake-up period corresponding to the first communication service and the seventh information includes the range used for setting the fourth wake-up period corresponding to the second communication service, the electronic device may determine the ninth information based on the first range and the second range. In an embodiment, since the fifth information includes the first range used for setting the third wake-up period corresponding to the first communication service and the seventh information includes the range used for setting the fourth wake-up period corresponding to the second communication service, the electronic device may determine a value within a range which is an intersection of the first range and the second range as the ninth information.

The electronic device, which determines the ninth information, may perform the keep-alive operation based on the ninth information. In an embodiment, the electronic device may perform the keep-alive operation based on the wake-up period corresponding to the ninth information.

In an embodiment, if the sixth information indicates that the first external electronic device is a device which accepts initiation of the keep-alive operation by the electronic device, and the eighth information indicates that the second external electronic device is a device which accepts initiation of the keep-alive operation by the electronic device, the electronic device may transmit a keep-alive request message to each of the first external electronic device and the second external electronic device, and receive a keep-alive response message from each of the first external electronic device and the second external electronic device in response to the keep-alive request message.

In an embodiment, if the sixth information indicates that the first external electronic device is a device which initiates the keep-alive operation and the eighth information indicates that the second external electronic device is a device which initiates the keep-alive operation, the electronic device may receive a keep-alive request message from each of the first external electronic device and the second external electronic device, and transmit a keep-alive response message to each of the first external electronic device and the second external electronic device in response to the keep-alive request message.

In an embodiment, if the sixth information indicates that the first external electronic device is a device which performs the keep-alive operation based on a setting of a counterpart device, the second information indicates that the electronic device is a device which initiates the keep-alive operation, the eighth information indicates that the second external electronic device is a device which performs the keep-alive operation based on a setting of a counterpart device, and the fourth information indicates that the electronic device is a device which initiates the keep-alive operation, the electronic device may transmit a keep-alive request message to each of the first external electronic device and the second external electronic device, and receive a keep-alive response message from each of the first external electronic device and the second external electronic device in response to the keep-alive request message.

In an embodiment, if the sixth information indicates that the first external electronic device is a device which performs the keep-alive operation based on a setting of a counterpart device, the second information indicates that the electronic device is a device which accepts initiation of the keep-alive operation by the first external electronic device, the eighth information indicates that the second external electronic device is a device which performs the keep-alive operation based on a setting of a counterpart device, and the fourth information indicates that the electronic device is a device which accepts initiation of the keep-alive operation by the second external electronic device, the electronic device may receive a keep-alive request message from each of the first external electronic device and the second external electronic device, and transmit a keep-alive response message to each of the first external electronic device and the second external electronic device in response to the keep-alive request message.

In an embodiment, the electronic device may identify, based on the sixth information and the eighth information, not to perform the keep-alive operation. In this case, the electronic device may receive, from the first external electronic device, the fifth message including tenth information related to a fifth wake-up period preferred by the first external electronic device corresponding to the firs communication service and eleventh information related to a device which performs the keep-alive operation. In an embodiment, the fifth message may be an update message.

In an embodiment, the tenth information may be a range used for setting the fifth wake-up period corresponding to the first communication service. For example, the tenth information may be a parameter value of a parameter keep included in the update message. The parameter keep may be included in a Via header field parameter included in the update message.

In an embodiment, the eleventh information may indicate information related to the device which performs the keep-alive operation (e.g., an endpoint device which performs the keep-alive operation). For example, the eleventh information may be a parameter value of a parameter act included in the update message.

The electronic device, which receives the fifth message, may receive, from the second external electronic device, a sixth message including twelfth information related to a sixth wake-up period preferred by the second external electronic device and corresponding to the second communication service, and thirteenth information related to a device performing a keep-alive operation. In an embodiment, the sixth message may be an update message.

In an embodiment, the twelfth information may be a range used for setting the sixth wake-up period of a timer corresponding to the second communication service. For example, the twelfth information may be a parameter value of a parameter keep included in the update message. The parameter keep may be included in a Via header field parameter included in the update message.

In an embodiment, the thirteenth information may indicate information related to a device performing the keep-alive operation (e.g., an endpoint device performing the keep-alive operation). For example, the thirteenth information may be a parameter value of a parameter act included in the update message.

The electronic device, which receives the sixth message from the second external electronic device, may transmit, to the first external electronic device, a seventh message including tenth information and fourteenth information related to a device performing the keep-alive operation. In an embodiment, the seventh message may be a 200 OK message, which is a response message to the update message. In an embodiment, the fourteenth information may indicate information related to the device performing the keep-alive operation (e.g., an endpoint device performing the keep-alive operation). For example, the fourteenth information may be a parameter value of the parameter act included in the 200 OK message.

The electronic device, which transmits the seventh message to the first external electronic device, may transmit, to the second external electronic device, an eighth message including the twelfth information and fifteenth information related to a device performing the keep-alive operation. In an embodiment, the eighth message may be a 200 OK message, which is a response message to the update message. In an embodiment, the fifteenth information may indicate information related to a device performing the keep-alive operation (e.g., an endpoint device performing the keep-alive operation). For example, the fifteenth information may be a parameter value of a parameter act included in the 200 OK message.

The electronic device, which transmits the eighth message to the second external electronic device, may determine sixteenth information related to a wake-up period corresponding to the first communication service and the second communication service based on the tenth information and the twelfth information. In an embodiment, if the tenth information is a third range used for setting the fifth wake-up period corresponding to the first communication service and the twelfth information is a fourth range used for setting the sixth wake-up period corresponding to the second communication service, the electronic device may determine sixteenth information based on the third range and the fourth range.

The electronic device, which determines the sixteenth information, may perform the keep-alive operation based on the sixteenth information. In an embodiment, the electronic device may perform the keep-alive operation based on a wake-up period corresponding to the sixteenth information.

According to an embodiment of the disclosure, a method may comprise transmitting, to an external electronic device (108; 600), a first message including first information related to a first wake-up period, which is preferred by an electronic device (101) and corresponds to a communication service, and second information related to a device which performs a keep-alive operation.

According to an embodiment of the disclosure, the method may comprise, in response to the first message, receiving, from the external electronic device, a second message including third information related to a second wake-up period, which is preferred by the external electronic device and corresponds to the communication service, and fourth information related to a device which performs the keep-alive operation, the fourth information being associated with the second information.

According to an embodiment of the disclosure, the method may comprise performing the keep-alive operation based on the fourth information and fifth information related to a wake-up period which is associated with the first information and the third information and corresponds to the communication service.

According to an embodiment of the disclosure, the method may comprise, if the first information includes a first range used for setting the first wake-up period, and the third information includes a second range used for setting the second wake-up period, identifying the fifth information based on the first range and the second range.

According to an embodiment of the disclosure, the method may comprise, if the first information includes a first range used for setting the first wake-up period, and the third information includes a second range used for setting the second wake-up period, identifying a value within a range which is an intersection of the first range and the second range as the fifth information.

According to an embodiment of the disclosure, the method may comprise identifying not to perform the keep-alive operation based on the fourth information.

According to an embodiment of the disclosure, the method may comprise receiving, from the external electronic device, a third message including sixth information related to a third wake-up period, which is preferred by the external electronic device and corresponds to the communication service, and seventh information related to a device which performs the keep-alive operation.

According to an embodiment of the disclosure, the method may comprise, in response to the third message, transmitting, to the external electronic device, a fourth message including the sixth information and eighth information related to a device which performs the keep-alive operation.

According to an embodiment of the disclosure, the method may comprise performing the keep-alive operation based on the sixth information.

According to an embodiment of the disclosure, a method may comprise identifying whether a set condition related to a change in a wake-up period corresponding to a communication service is satisfied while performing a keep-alive operation with an external electronic device (108; 600) based on the wake-up period.

According to an embodiment of the disclosure, the method may comprise, based on identifying that the set condition is satisfied, transmit, to the external electronic device, a first message including first information related to a first wake-up period, which is preferred by the electronic device and corresponds to the communication service, and second information related to a device which performs the keep-alive operation.

According to an embodiment of the disclosure, the method may comprise, in response to the first message, receiving, from the external electronic device, a second message including third information related to a second wake-up period, which is preferred by the external electronic device and corresponds to the communication service, and fourth information related to a device which performs the keep-alive operation, the fourth information being associated with the second information.

According to an embodiment of the disclosure, the method may comprise perform the keep-alive operation based on the fourth information and fifth information related to a changed wake-up period which is associated with the first information and the third information.

According to an embodiment of the disclosure, the method may comprise, if the first information includes a first range used for setting the first wake-up period, and the third information includes a second range used for setting the second wake-up period, identifying the fifth information based on the first range and the second range.

According to an embodiment of the disclosure, the method may comprise, if the first information includes a first range used for setting the first wake-up period, and the third information includes a second range used for setting the second wake-up period, identifying a value within a range which is an intersection of the first range and the second range as the fifth information.

According to an embodiment of the disclosure, the set condition may include at least one of a condition that a remaining battery level is less than a threshold remaining battery level, a condition that reception strength is less than threshold reception strength, a condition that a detected temperature is higher than or equal to a threshold temperature, a condition that the electronic device is in a roaming state, or a condition that the electronic device operates in a power saving mode.

According to an embodiment of the disclosure, a method may comprise transmitting, to a first external electronic device (111a), a first message including first information related to a first wake-up period, which is preferred by an electronic device 101 and corresponds to a first communication service, and second information related to a device which performs a keep-alive operation.

According to an embodiment of the disclosure, the method may comprise transmitting, to a second external electronic device (111b), a second message including third information related to a second wake-up period, which is preferred by the electronic device and corresponds to a second communication service, and fourth information related to a device which performs the keep-alive operation.

According to an embodiment of the disclosure, the method may comprise, in response to the first message, receiving, from the first external electronic device, a third message including fifth information related to a third wake-up period which is preferred by the first external electronic device and corresponds to the first communication service, and sixth information related to a device performing the keep-alive operation, the sixth information being associated with the second information.

According to an embodiment of the disclosure, the method may comprise, in response to the second message, receiving, from the second external electronic device, a fourth message including seventh information related to a fourth wake-up period which is preferred by the second external electronic device and corresponds to the second communication service, and eighth information related to a device performing the keep-alive operation, the eighth information being associated with the fourth information.

According to an embodiment of the disclosure, the method may comprise performing the keep-alive operation based on the sixth information, the eighth information, and ninth information related to a wake-up period corresponding to the first communication service and the second communication service, the ninth information being associated with the fifth information and the seventh information.

According to an embodiment of the disclosure, the method may comprise, if the fifth information includes a first range used for setting the third wake-up period, and the seventh information includes a second range used for setting the fourth wake-up period, identifying the ninth information based on the first range and the second range.

According to an embodiment of the disclosure, the method may comprise, if the fifth information includes a first range used for setting the third wake-up period, and the seventh information includes a second range used for setting the fourth wake-up period, identifying a value within a range which is an intersection of the first range and the second range as the ninth information.

According to an embodiment of the disclosure, performing the keep-alive operation may comprise, if the sixth information indicates that the first external electronic device is a device which accepts initiation of the keep-alive operation by the electronic device, and the eighth information indicates that the second external electronic device is a device which accepts initiation of the keep-alive operation by the electronic device, transmitting a keep-alive request message to each of the first external electronic device and the second external electronic device.

According to an embodiment of the disclosure, performing the keep-alive operation may comprise, in response to the keep-alive request message, receiving a keep-alive response message from each of the first external electronic device and the second external electronic device.

According to an embodiment of the disclosure, performing the keep-alive operation may comprise, if the sixth information indicates that the first external electronic device is a device which initiates the keep-alive operation, and the eighth information indicates that the second external electronic device initiates the keep-alive operation, receiving a keep-alive request message from each of the first external electronic device and the second external electronic device.

According to an embodiment of the disclosure, performing the keep-alive operation may comprise, in response to the keep-alive request message, transmitting a keep-alive response message to each of the first external electronic device and the second external electronic device.

According to an embodiment of the disclosure, performing the keep-alive operation may comprise, if the sixth information indicates that the first external electronic device is a device performing the keep-alive operation based on a setting of a counterpart device, the second information indicates that the electronic device is a device initiating the keep-alive operation, the eighth information indicates that the second external electronic device is a device performing the keep-alive operation based on a setting of a counterpart device, and the fourth information indicates that the electronic device is the device initiating the keep-alive operation, transmitting a keep-alive request message to each of the first external electronic device and the second external electronic device.

According to an embodiment of the disclosure, performing the keep-alive operation may comprise, in response to the keep-alive request message, receiving a keep-alive response message from each of the first external electronic device and the second external electronic device.

According to an embodiment of the disclosure, performing the keep-alive operation may comprise, if the sixth information indicates that the first external electronic device is a device performing the keep-alive operation based on a setting of a counterpart device, the second information indicates that the electronic device is a device accepting the keep-alive operation, the eighth information indicates that the second external electronic device is a device performing the keep-alive operation based on a setting of a counterpart device, and the fourth information indicates that the electronic device is a device accepting initiation of the keep-alive operation by the second external electronic device, receiving a keep-alive request message from each of the first external electronic device and the second external electronic device.

According to an embodiment of the disclosure, performing the keep-alive operation may comprise, in response to the keep-alive request message, transmitting a keep-alive response message to each of the first external electronic device and the second external electronic device.

According to an embodiment of the disclosure, the method may comprise identifying not to perform the keep-alive operation based on the sixth information and the eighth information.

According to an embodiment of the disclosure, the method may comprise receiving, from the first external electronic device, a fifth message comprising tenth information related to a fifth wake-up period which is preferred by the first external electronic device and corresponds to the first communication service, and eleventh information related to a device performing the keep-alive operation.

According to an embodiment of the disclosure, the method may comprise receiving, from the second external electronic device, a sixth message including twelfth information related to a sixth wake-up period which is preferred by the second external electronic device and corresponds to the second communication service, and thirteenth information related to a device performing the keep-alive operation.

According to an embodiment of the disclosure, the method may comprise, in response to the fifth message, transmitting, to the first external electronic device, a seventh message including the tenth information and fourteenth information related to a device performing the keep-alive operation.

According to an embodiment of the disclosure, the method may comprise, in response to the sixth message, transmitting, to the second external electronic device, an eighth message including the twelfth information and fifteenth information related to a device performing the keep-alive operation.

According to an embodiment of the disclosure, the method may comprise, based on the tenth information and the twelfth information, identifying sixteenth information related to a wake-up period corresponding to the first communication service and the second communication service.

According to an embodiment of the disclosure, the method may comprise performing the set operation based on the sixteenth information.

According to an embodiment of the disclosure, the method may comprise, if the tenth information includes a third range used for setting the fifth wake-up period and the twelfth information includes a fourth range used for setting the sixth wake-up period, identifying the sixteenth information based on the third range and the fourth range.

According to an embodiment of the disclosure, a storage medium storing at least one instruction readable by a computer may be provided.

According to an embodiment of the disclosure, the at least one computer instruction, when executed by one or more processors (120; 310) of an electronic device (101) individually or collectively, may cause the electronic device to perform at least one operation.

According to an embodiment of the disclosure, the at least one operation may comprise transmitting, to an external electronic device (108; 600), a first message including first information related to a first wake-up period, which is preferred by the electronic device and corresponds to a communication service, and second information related to a device which performs a keep-alive operation.

According to an embodiment of the disclosure, the at least one operation may comprise, in response to the first message, receiving, from the external electronic device, a second message including third information related to a second wake-up period, which is preferred by the external electronic device and corresponds to the communication service, and fourth information related to a device which performs the keep-alive operation.

According to an embodiment of the disclosure, the at least one operation may comprise performing the keep-alive operation based on the fourth information and fifth information related to a wake-up period which is associated with the first information and the third information and corresponds to the communication service.

According to an embodiment of the disclosure, a storage medium storing at least one instruction readable by a computer may be provided.

According to an embodiment of the disclosure, the at least one computer instruction, when executed by one or more processors (120; 310) of an electronic device (101) individually or collectively, may cause the electronic device to perform at least one operation.

According to an embodiment of the disclosure, the at least one operation may comprise identifying whether a set condition related to a change in a wake-up period corresponding to a communication service is satisfied while performing a keep-alive operation with an external electronic device (108; 600) based on the wake-up period.

According to an embodiment of the disclosure, the at least one operation may comprise, based on identifying that the set condition is satisfied, transmitting, to the external electronic device, a first message including first information related to a first wake-up period, which is preferred by the electronic device and corresponds to the communication service, and second information related to a device which performs the keep-alive operation.

According to an embodiment of the disclosure, the at least one operation may comprise, in response to the first message, receiving, from the external electronic device, a second message including third information related to a second wake-up period, which is preferred by the external electronic device and corresponds to the communication service, and fourth information related to a device which performs the keep-alive operation, the fourth information being associated with the second information.

According to an embodiment of the disclosure, the at least one operation may comprise performing the keep-alive operation based on the fourth information and fifth information related to a changed wake-up period which is associated with the first information and the third information

According to an embodiment of the disclosure, a storage medium storing at least one instruction readable by a computer may be provided.

According to an embodiment of the disclosure, the at least one computer instruction, when executed by one or more processors (120; 310) of an electronic device (101) individually or collectively, may cause the electronic device to perform at least one operation.

According to an embodiment of the disclosure, the at least one operation may comprise transmitting, to a first external electronic device (111a), a first message including first information related to a first wake-up period, which is preferred by the electronic device and corresponds to a first communication service, and second information related to a device which performs a keep-alive operation.

According to an embodiment of the disclosure, the at least one operation may comprise transmitting, to a second external electronic device (111b), a second message including third information related to a second wake-up period, which is preferred by the electronic device and corresponds to a second communication service, and fourth information related to a device which performs the keep-alive operation.

According to an embodiment of the disclosure, the at least one operation may comprise, in response to the first message, receiving, from the first external electronic device, a third message including fifth information related to a third wake-up period which is preferred by the first external electronic device and corresponds to the first communication service, and sixth information related to a device performing the keep-alive operation, the sixth information being associated with the second information.

According to an embodiment of the disclosure, the at least one operation may comprise, in response to the second message, receiving, from the second external electronic device, a fourth message including seventh information related to a fourth wake-up period which is preferred by the second external electronic device and corresponds to the second communication service, and eighth information related to a device performing the keep-alive operation, the eighth information being associated with the fourth information.

According to an embodiment of the disclosure, the at least one operation may comprise performing the keep-alive operation based on the sixth information, the eighth information, and ninth information related to a wake-up period corresponding to the first communication service and the second communication service, the ninth information being associated with the fifth information and the seventh information.

According to an embodiment of the disclosure, it is possible to efficiently manage wake-up time points for services

According to an embodiment of the disclosure, it is possible to receive consumed resources by efficiently managing wake-up time points for services.

## Claims

1. An electronic device (101), comprising:
communication circuitry (190; 320);
one or more processors (120; 310) including processing circuitry; and
memory (130) storing instructions that, when executed by the one or more processors individually or collectively, cause the electronic device to:
transmit, to an external electronic device (108; 600) via the communication circuitry, a first message including first information related to a first wake-up period, which is preferred by the electronic device and corresponds to a communication service, and second information related to a device which performs a keep-alive operation,
in response to the first message, receive, from the external electronic device via the communication circuitry, a second message including third information related to a second wake-up period, which is preferred by the external electronic device and corresponds to the communication service, and fourth information related to a device which performs the keep-alive operation, the fourth information being associated with the second information, and
perform the keep-alive operation based on the fourth information and fifth information related to a wake-up period which is associated with the first information and the third information and corresponds to the communication service.

2. The electronic device of claim 1, wherein the instructions, when executed by the one or more processors individually or collectively, cause the electronic device to:
if the first information includes a first range used for setting the first wake-up period, and the third information includes a second range used for setting the second wake-up period, identify the fifth information based on the first range and the second range.

3. The electronic device of claim 1, wherein the instructions, when executed by the one or more processors individually or collectively, cause the electronic device to:
if the first information includes a first range used for setting the first wake-up period, and the third information includes a second range used for setting the second wake-up period, identify a value within a range which is an intersection of the first range and the second range as the fifth information.

4. The electronic device of any one of claims 1 to 3, wherein the instructions, when executed by the one or more processors individually or collectively, cause the electronic device to:
identify not to perform the keep-alive operation based on the fourth information,
receive, from the external electronic device via the communication circuitry, a third message including sixth information related to a third wake-up period, which is preferred by the external electronic device and corresponds to the communication service, and seventh information related to a device which performs the keep-alive operation, and
in response to the third message, transmit, to the external electronic device via the communication circuitry, a fourth message including the sixth information and eighth information related to a device which performs the keep-alive operation.

5. The electronic device of claim 4, wherein the instructions, when executed by the one or more processors individually or collectively, cause the electronic device to:
perform the keep-alive operation based on the sixth information.

6. An electronic device (101), comprising:
communication circuitry (190; 320);
one or more processors (120; 310) including processing circuitry; and
memory (130) storing instructions that, when executed by the one or more processors individually or collectively, cause the electronic device to:
identify whether a set condition related to a change in a wake-up period corresponding to a communication service is satisfied while performing a keep-alive operation with an external electronic device (108; 600) based on the wake-up period,
based on identifying that the set condition is satisfied, transmit, to the external electronic device via the communication circuitry, a first message including first information related to a first wake-up period, which is preferred by the electronic device and corresponds to the communication service, and second information related to a device which performs the keep-alive operation,
in response to the first message, receive, from the external electronic device via the communication circuitry, a second message including third information related to a second wake-up period, which is preferred by the external electronic device and corresponds to the communication service, and fourth information related to a device which performs the keep-alive operation, the fourth information being associated with the second information, and
perform the keep-alive operation based on the fourth information and fifth information related to a changed wake-up period which is associated with the first information and the third information.

7. The electronic device of claim 6, wherein the instructions, when executed by the one or more processors individually or collectively, cause the electronic device to:
if the first information includes a first range used for setting the first wake-up period, and the third information includes a second range used for setting the second wake-up period, identify the fifth information based on the first range and the second range.

8. The electronic device of claim 6, wherein the instructions, when executed by the one or more processors individually or collectively, cause the electronic device to:
if the first information includes a first range used for setting the first wake-up period, and the third information includes a second range used for setting the second wake-up period, identify a value within a range which is an intersection of the first range and the second range as the fifth information.

9. The electronic device of any one of claims 6 to 8, wherein the set condition includes at least one of:
a condition that a remaining battery level is less than a threshold remaining battery level,
a condition that reception strength is less than threshold reception strength,
a condition that a detected temperature is higher than or equal to a threshold temperature,
a condition that the electronic device is in a roaming state, or
a condition that the electronic device operates in a power saving mode.

10. An electronic device (101), comprising:
communication circuitry (190; 320);
one or more processors (120; 310) including processing circuitry; and
memory (130) storing instructions that, when executed by the one or more processors individually or collectively, cause the electronic device to:
transmit, to a first external electronic device (111a) via the communication circuitry, a first message including first information related to a first wake-up period, which is preferred by the electronic device and corresponds to a first communication service, and second information related to a device which performs a keep-alive operation,
transmit, to a second external electronic device (111b) via the communication circuitry, a second message including third information related to a second wake-up period, which is preferred by the electronic device and corresponds to a second communication service, and fourth information related to a device which performs the keep-alive operation,
in response to the first message, receive, from the first external electronic device via the communication circuitry, a third message including fifth information related to a third wake-up period which is preferred by the first external electronic device and corresponds to the first communication service, and sixth information related to a device performing the keep-alive operation, the sixth information being associated with the second information,
in response to the second message, receive, from the second external electronic device via the communication circuitry, a fourth message including seventh information related to a fourth wake-up period which is preferred by the second external electronic device and corresponds to the second communication service, and eighth information related to a device performing the keep-alive operation, the eighth information being associated with the fourth information, and
perform the keep-alive operation based on the sixth information, the eighth information, and ninth information related to a wake-up period corresponding to the first communication service and the second communication service, the ninth information being associated with the fifth information and the seventh information.

11. The electronic device of claim 10, wherein the instructions, when executed by the one or more processors individually or collectively, cause the electronic device to:
if the fifth information includes a first range used for setting the third wake-up period, and the seventh information includes a second range used for setting the fourth wake-up period, identify the ninth information based on the first range and the second range.

12. The electronic device of claim 10, wherein the instructions, when executed by the one or more processors individually or collectively, cause the electronic device to:
if the fifth information includes a first range used for setting the third wake-up period, and the seventh information includes a second range used for setting the fourth wake-up period, identify a value within a range which is an intersection of the first range and the second range as the ninth information.

13. The electronic device of any one of claims 10 to 12, wherein the instructions, when executed by the one or more processors individually or collectively, cause the electronic device to:
if the sixth information indicates that the first external electronic device is a device which accepts initiation of the keep-alive operation by the electronic device, and the eighth information indicates that the second external electronic device is a device which accepts initiation of the keep-alive operation by the electronic device, transmit a keep-alive request message to each of the first external electronic device and the second external electronic device via the communication circuitry, and
in response to the keep-alive request message, receive a keep-alive response message from each of the first external electronic device and the second external electronic device via the communication circuitry.

14. The electronic device of any one of claims 10 to 12, wherein the instructions, when executed by the one or more processors individually or collectively, cause the electronic device to:
if the sixth information indicates that the first external electronic device is a device which initiates the keep-alive operation, and the eighth information indicates that the second external electronic device initiates the keep-alive operation, receive a keep-alive request message from each of the first external electronic device and the second external electronic device via the communication circuitry, and
in response to the keep-alive request message, transmit a keep-alive response message to each of the first external electronic device and the second external electronic device via the communication circuitry.

15. A storage medium storing at least one instruction readable by a computer, wherein the at least one computer instruction, when executed by one or more processors (120; 310) of an electronic device (101), causes the electronic device to perform at least one operation,
the at least one operation comprising:
transmitting, to an external electronic device (108; 600), a first message including first information related to a first wake-up period, which is preferred by the electronic device and corresponds to a communication service, and second information related to a device which performs a keep-alive operation;
in response to the first message, receiving, from the external electronic device, a second message including third information related to a second wake-up period, which is preferred by the external electronic device and corresponds to the communication service, and fourth information related to a device which performs the keep-alive operation; and
performing the keep-alive operation based on the fourth information and fifth information related to a wake-up period which is associated with the first information and the third information and corresponds to the communication service.
